# EUROPÄISCHE PATENTSCHRIFT

(11) **EP 3 262 327 B1**
(45) Veröffentlichungstag und Bekanntmachung des Hinweises auf die Patenterteilung: **13.01.2021**
(21) Anmeldenummer: 16702510.5
(22) Anmeldetag: 27.01.2016
(51) Int. Cl.: F16K 31/08, A62C 35/68, F16K 31/363, F16K 31/40, F16K 31/06, F16K 37/00, F16K 1/42

(54) **VENTIL ZUM SCHALTEN VON FLUIDEN, LOESCHANLAGE UND VERFAHREN**
VALVE FOR SWITCHING FLUIDS, EXTINGUISHING SYSTEM, AND A METHOD
SOUPAPE SERVANT À COMMUTER DES FLUIDES, INSTALLATION D'EXTINCTION D'INCENDIE ET PROCÉDÉ

(30) Priorität: 26.02.2015 DE 102015203486
(43) Veröffentlichungstag der Anmeldung: 03.01.2018
(73) Patentinhaber: Minimax GmbH & Co. KG, 23840 Bad Oldesloe (DE)
(72) Erfinder: ZLATINTSIS, Chrysafis, 23840 Bad Oldesloe (DE)
(74) Vertreter: Eisenführ Speiser
(86) Internationale Anmeldenummer: PCT/EP2016/051659
(87) Internationale Veröffentlichungsnummer: WO 2016/134909

(56) Entgegenhaltungen:
- EP-A2- 1 120 593
- WO-A1-00/37839
- WO-A1-93/20370
- WO-A1-2006/110149
- DE-A1-102012 207 986
- FR-A- 1 238 863
- FR-A3- 2 990 491
- GB-A- 544 524
- US-A- 1 961 599
- US-A- 2 629 401
- US-A1- 2007 241 298

## Beschreibung

Die vorliegende Erfindung betrifft ein Ventil zum Schalten von Fluiden, insbesondere ein Sektionsventil für eine Löschmittelleitung, eine Löschanlage mit einem solchen Ventil und ein Verfahren zur Steuerung eines Ventils zum Schalten von Fluiden, insbesondere eines Sektionsventils für eine Löschmittelleitung.

WO 2006/110149 A1 offenbart ein pneumatisches Durchflusssteuerventil zur Brandbekämpfungsüberdruckverhinderung. Ein gesteuertes Überdruckventil umfasst einen Ventilkörper mit einem Gaseinlass zur Verbindung mit einem Gas-Container und einem Gasauslass zur Abgabe von Gas in einen geschützten Bereich. Das gesteuerte Ventil umfasst einen beweglichen Schieber, der in dem Gehäusekörper aufgenommen und zwischen einer ersten und einer zweiten Position beweglich ist. Der bewegliche Schieber besitzt ein erstes Ende und ein zweites Ende. Eine primäre Durchflusspassage verbindet den Gaseinlass und den Gasauslass und vergrößert sich mit einer linearen Bewegung des beweglichen Schiebers. Der bewegliche Schieber ist in Richtung der ersten Position durch einen von der zweiten Kammer anliegenden Gasdruck und eine Feder vorgespannt.

WO 93/20370 A1 offenbart ein elektromagnetisches Ventil, insbesondere für Wasserdruckleitungen, das die Verwendung leistungsärmerer Erregerspulen erlaubt. Hierfür wird ein Dichtkörper über einen Schaft beweglich mit dem Anker verbunden. Dadurch kann sich der Anker beim Anziehen des Ventils lastfrei in einen Bereich mit größerer Kraftentfaltung des Magnetfeldes bewegen, wodurch eine leistungsärmere Erregerspule genügt, um das Ventil gegen den Leitungsdruck zu öffnen.

FR 2 990 491 A3 offenbart ein Solenoid-Ventil zum proportionalen Justieren von Fluiddrücken, mit einem beweglichen Kern, der relativ zu einem festen Kern axial durch Wirkung einer Kraft eines Magnetfeldes axial beweglich ist, das von einer Spule, die in dem festen Kern angeordnet ist, erzeugt wird, um eine Fluidpassage zu regeln. Eine elastische Einheit, d.h. eine Feder, wirkt auf den beweglichen Kern und formt einen Anschlag mit dem festen Kern und einem Regelelement. Das Regelelement ist justierbar in dem festen Kern positioniert. Das Element weist eine traverse Öffnung auf, in der ein ferromagnetisches Element eingeführt ist. Positionsjustiereinheiten befinden sich zwischen dem Regelelement und dem Element. Das Element ist axial relativ zum beweglichen Kern positioniert.

US 2007/241298 A1 offenbart eine elektromagnetische Vorrichtung und ein Verfahren zur Fluidstromsteuerung. Ein Aktuator mit Aktuatorbasis, Spule und Polstück ist vorgesehen, die eine Tasche für einen darin befindlichen ferromagnetischen Anker bilden. Der Aktuator mit einem Radialmagneten und einer Magnetspule ist so konstruiert und angeordnet, dass er beim Anlegen eines Spulenantriebsstroms von einem Steuerkreis eine lineare Verschiebung des Ankers bewirkt. Der Aktuator kann eine flexible Membran enthalten, die den Anker teilweise umschließt, um eine Ankerkammer zu bilden, die mit einer inkompressiblen Flüssigkeit gefüllt ist. Bei einer Ventilauslegung wird ein Fluidstrom gestoppt, indem die Membran gegen einen Ventilsitz getrieben wird. Der Druck von der gesteuerten Flüssigkeit in der Leitung wird durch die Membran auf die Flüssigkeit in der Ankerkammer übertragen, so dass der Anker nicht der Kraft entgegenwirken muss, die durch den Druck der Leitungsflüssigkeit auf die Membran ausgeübt wird. Ein Flüssigkeitsstrom wird geöffnet, indem die Membran vom Ventilsitz weggetrieben wird.

US 1,961,599 offenbart einen Ventilmechanismus mit einem Gehäuse mit einem Hochdruckeinlass und einem Niederdruckauslass, einem dazwischen sitzenden Hauptventil zum Steuern des Durchgangs von Fluid durch diesen, einem Zylinder, in dem das Hauptventil betätigt werden kann, wobei der Zylinder mit dem Hochdruckeinlass in Verbindung steht, einen Ventilsitz, der den Zylinder über dem Ventil schließt und auf seiner anderen Seite eine Kammer aufweist, eine zwischen dem Zylinder und der Kammer kommunizierende Öffnung, eine zwischen der Kammer und dem Niederdruckauslass kommunizierende zweite Öffnung, ein Pilotventil zum Steuern des zweiten erwähnten Anschlusses Mittel zum Betätigen des Vorsteuerventils und eine sich nach unten erstreckende Spindel an dem Ventil, die mit einer Aussparung mit Schraubengewinde versehen ist, die dazu ausgelegt ist, ein Werkzeug zum manuellen Manipulieren des Ventils aufzunehmen.

GB 544 524 A offenbart ein Ventil zum Steuern des Flusses von Flüssigkeiten oder Gasen, umfassend zwei nachgiebig montierte gegenüberliegende Ventilkomponenten, eine Verkleidung eines verformbaren Materials auf einer der Komponenten, Mittel, die ein Wegdrücken einer der Komponenten durch Fluiddruck von der anderen erlauben, um das Ventil zu öffnen, eine Steuerfeder, die angepasst ist, um die Komponente in die Schließposition zurückzubringen, wenn der Druck abfällt, und Mittel, die der zweiten Komponente ein Nachgeben erlauben, um eine Beschädigung des verformbaren Materials zu verhindern, wenn sich die Ventilkomponenten in der geschlossenen Position befinden.

DE 10 2012 207 986 A1 betrifft ein Elektromagnetventil mit in einem Ventilgehäuse in Reihe angeordneten zwei Ventilschließkörpern, die abhängig von der Schaltstellung eines Magnetankers betätigbar sind, dessen Stirnfläche mit einer Durchgangsbohrung versehen ist, so dass die Stirnfläche, die von einem im Ventilgehäuse fixierten Magnetkern abgewandt ist, als Ringfläche ausgebildet ist, die an einer Stirnfläche des ersten Ventilschließkörpers anlegbar ist, der unter der Wirkung einer Rückstellfeder den zweiten Ventilschließkörper kontaktiert. Um ein unerwünschtes Anhaften des ersten Ventilschließkörpers an der hydraulisch benetzten Ringfläche des Magnetankers zu verhindern, sieht die DE 10 2012 207 986 A1 vor, dass zwischen der Ringfläche und der Stirnfläche ein Hohlraum vorgesehen ist.

FR 1 238 863 A offenbar eine Druckanzeige, umfassend einen Kolben, auf den der anzuzeigende Fluiddruck wirkt, und eine gegenüberliegende Feder, wobei der Kolben eine zylindrische Stange ist, deren Abdichtung mit dem Hohlraum, in dem er sich bewegt, durch einen O-Ring aus elastischem Material erzeugt wird, wobei der feste Teil des Indikators um den Raum herum, in dem sich das dem Umgebungsluftdruck unterworfene Ende des Stabes bewegt, einen Teil aus transparentem Material umfasst, wobei das Ende vorzugsweise eine andere Farbe aufweist als das des Teils der zylindrischen Stange, der dieses Ende trägt.

WO 00/37839 A1 offenbart einen Druckregler, der ein Messgerät mit robusten internen Komponenten verwendet. Das Messgerät enthält einen Stift und eine Vorspannfeder. Eine Seite des Druckstifts kommuniziert direkt mit dem Quellendruck und wird durch den Quellendruck gedrängt, den Druckstift in eine erste Richtung zu bewegen, während sich die andere Seite auf Umgebungs- oder Atmosphärendruck befindet. Der Druckstift ist im Regler in Längsrichtung angeordnet, und am Ende des Druckstifts ist eine Scheibenanzeige angebracht. Eine Linse ist so vorgesehen, dass der Rand der Scheibe für einen Benutzer sichtbar ist.

US 5,915,665 offenbart ein Magnetventil mit Haltevorrichtung. Ein Vorsteuerventil wird durch einen Magneten betätigt, der durch eine Spule gebildet wird, die um eine nichtmagnetische Hülse gewickelt ist, die eine Bohrung aufweist. Ein Seltenerd-Permanentmagnet befindet sich in der Bohrung neben einem Ende und grenzt an einen Flusskonzentrator weiter in der Bohrung an. Ein Kolben befindet sich verschiebbar in der Bohrung, die durch eine Feder vom Flussmittelkonzentrator weg vorgespannt ist, und ragt an einem anderen Ende der Bohrung heraus. Ein Gehäuse aus magnetischem Material vervollständigt einen Magnetflussweg um den Magneten und hat eine Öffnung, durch die der Kolben ragt. Das Vorsteuerventil enthält einen Käfig aus starrem nichtmagnetischem Material, der an das Gehäuse angrenzt, und eine Aussparung, die den Kolben außerhalb des Kontakts mit dem Gehäuse hält. Der Kolben öffnet und schließt selektiv ein Steuerrohr durch den Käfig, um eine Membran zu betätigen, die daraufhin einen primären Ventilsitz einrastet, um den Flüssigkeitsfluss durch einen Ventilkörper zu steuern.

Magnetventile, die einen Permanentmagneten nutzen, mit dem ein Kolben oder Anker des Ventils in einer vorbestimmten Position gehalten wird, sind beispielsweise aus DE 103 24 091 A1, EP 0 340 625 B1, EP 0 710 790 B1 und WO 94/23435 A1 bekannt.

Gemein ist den in diesen Dokumenten beschriebenen Magnetventilen, dass sie aufbaubedingt eine nur geringe Flexibilität hinsichtlich Einstellmöglichkeiten und so gut wie keine Flexibilität hinsichtlich Ihrer Nutzung bzw. Bedienung aufweisen.

So fehlt es bei der Anwendung der Magnetventile aus DE 103 24 091 A1, EP 0 340 625 B1, EP 0 710 790 B1 und WO 94/23435 A1 an der Möglichkeit, eine manuelle Öffnung bzw. ein manuelles Schließen des Ventils vorzunehmen, da jeweils für eine Bewegung des Kolbens oder Ankers in eine Position, in der das Ventil geschlossen ist, und/oder eine Position, in der das Ventil geöffnet ist, ein elektrischer Impuls an eine dafür vorgesehen Spule bewirkt werden muss. Bei einem Ventil, das in dieser Weise elektrischen Strom bzw. Energie für ein Öffnen benötigt, ist daher bei Strom- bzw. Energieausfall eine Bedienung nicht möglich. Auswirkungen eines Strom- oder Energieausfalls sind insbesondere im Bereich der Löschtechnik besonders kritisch.

Zudem ist die von den Spulen zur Bewegung des Kolbens oder Ankers aufzubringende Kraft und damit der durch die Spulen mindestens zu leitende elektrische Strom bauartbedingt bestimmt. Dies ist insofern nachteilig, als dass damit Beschränkungen in der möglichen Ansteuerung vorliegen, die einen Austausch eines Ventils durch ein anderes Ventil mit einer anderen Stromanforderung erschweren. Es ist möglich, eine eigene Ansteuerung für ein jeweiliges Ventil vorzusehen, die den benötigten Mindeststrom bereitstellt. Dies stellt allerdings zusätzlichen Aufwand dar, der einerseits die Kosten des Ventils beeinflusst und andererseits eine zusätzliche Ausfallanfälligkeit bedeutet. Bereits bei der Auslegung des grundsätzlichen Ventils könnten verschiedene Modelle vorgesehen werden, die auf jeweilige Standards hin entworfen sind. Damit ist allerdings eine Diversifizierung des Herstellungsprozesses verbunden, die ebenfalls zu einer Kostensteigerung führt, zumal selbst bei einer Palette von Standards noch immer Grenzen in der Anwendung gesetzt sind.

Der vorliegenden Erfindung liegt angesichts des Vorstehenden als Ziel zugrunde, ein Ventil zum Schalten von Fluiden, insbesondere ein Sektionsventil für eine Löschmittelleitung, bereitzustellen, das im Vergleich zu den bekannten Lösungen eine größere Flexibilität hinsichtlich Einstellmöglichkeiten und/oder Nutzung bzw. Bedienung aufweist. Die Erfindung richtet sich auch auf eine entsprechende Löschanlage und ein Verfahren zur Steuerung eines solchen Ventils, insbesondere eines solchen Sektionsventils, für eine Löschmittelleitung.

Als Sektionsventil wird hier ein Ventil in einer Löschmittelleitung verstanden, mit dem ein Teil der Löschmittelleitung, in dem mit Druck beaufschlagtes Löschmittel vorliegt, von einem drucklosen Teil der Löschmittelleitung (der auch direkt in ein Ende der Löschmittelleitung übergehen kann) trennt. Im drucklosen Teil der Löschmittelleitung kann Löschmittel vorhanden sein, wobei dieser Teil auch leer (also etwa luftgefüllt) sein kann.

Nach einem ersten Aspekt der Erfindung wird ein Ventil zum Schalten von Fluiden, insbesondere ein Sektionsventil für eine Löschmittelleitung, vorgeschlagen, mit einem Steuerventil und einem Arbeitsventil, das für eine Vorsteuerung durch das Steuerventil ausgestaltet ist, mit einer Drosselbohrung, die eine erste Fluidverbindung zwischen einem mit Druck zu beaufschlagenden Zulauf des Ventils und einem Kolbenraum des Arbeitsventils bildet, und einem Arbeitskolben, mit einer ersten Stirnfläche gegenüber dem Kolbenraum, die größer ist als eine zweite Stirnfläche gegenüber dem Zulauf, wobei das Steuerventil für ein Öffnen und Schließen einer zweiten Fluidverbindung zwischen dem Kolbenraum und einem Ablauf des Ventils ausgestaltet ist, wobei das Steuerventil ferner umfasst: einen Steuerventilsitz, einen Anker, der in einem auf den Steuerventilsitz gedrückten Zustand gemeinsam mit dem Steuerventilsitz die zweite Fluidverbindung schließt, einen magnetisierbaren Kern und eine Steuerspule, die für eine Ausübung einer magnetischen Kraft auf den Anker ausgestaltet ist, derart, dass die Steuerspule den Anker vom Steuerventilsitz soweit abhebt, dass die zweite Fluidverbindung einen größeren Durchfluss als die erste Fluidverbindung erlaubt, wobei das Steuerventil a) eine Steuerfeder, die den Anker auf den Steuerventilsitz drückt und entgegen derer die Steuerspule den Anker vom Steuerventilsitz abhebt, einen Permanentmagneten, der in einem Ansteuerungszustand für ein Halten des vom Steuerventilsitz abgehobenen Ankers mittels des Kerns ausgestaltet ist, und einen Magnethalter aufweist, in und/oder an dem der Permanentmagnet in dem Ansteuerungszustand gehalten wird und der eine Entfernung des Permanentmagneten erlaubt, und/oder b) einen Permanentmagneten, der mittels des Kerns den Anker auf den Steuerventilsitz drückt und entgegen dessen Haltewirkung die Steuerspule den Anker vom Steuerventilsitz abhebt, eine Steuerfeder, die in einem Ansteuerungszustand für ein Halten des vom Steuerventilsitz abgehobenen Ankers ausgestaltet ist, und einen Magnethalter aufweist, in und/oder an dem der Permanentmagnet gehalten wird und der eine Entfernung des Permanentmagneten für einen Übergang in dem Ansteuerungszustand erlaubt, und wobei das Steuerventil für eine entlang einer von der Steuerfeder bewirkten Kraft variable Positionierung des Kerns ausgestaltet ist.

Nach einem weiteren Aspekt der Erfindung wird eine Löschanlage mit einer Löschmittelleitung und einem erfindungsgemäßen Ventil vorgeschlagen.

Nach einem anderen Aspekt der Erfindung wird ein Verfahren zur Steuerung eines Ventils zum Schalten von Fluiden, insbesondere eines Sektionsventils für eine Löschmittelleitung, vorgeschlagen, wobei das Ventil ein Steuerventil und ein Arbeitsventil aufweist, das für eine Vorsteuerung durch das Steuerventil ausgestaltet ist, mit einer Drosselbohrung, die eine erste Fluidverbindung zwischen einem mit Druck zu beaufschlagenden Zulauf des Ventils und einem Kolbenraum des Arbeitsventils bildet, und einem Arbeitskolben, mit einer ersten Stirnfläche gegenüber dem Kolbenraum, die größer ist als eine zweite Stirnfläche gegenüber dem Zulauf, wobei das Steuerventil ferner umfasst: einen Steuerventilsitz, einen Anker, der in einem auf den Steuerventilsitz gedrückten Zustand gemeinsam mit dem Steuerventilsitz eine zweite Fluidverbindung zwischen dem Kolbenraum und einem Ablauf des Ventils schließt, einen magnetisierbaren Kern und eine Steuerspule, die für eine Ausübung einer magnetischen Kraft auf den Anker ausgestaltet ist, wobei mit dem Steuerventil die zweiten Fluidverbindung geöffnet und geschlossen wird, wobei beim Öffnen der Anker vom Steuerventilsitz soweit abgehoben wird, dass die zweite Fluidverbindung einen größeren Durchfluss als die erste Fluidverbindung erlaubt, wobei a) in einem Ansteuerungszustand der vom Steuerventilsitz entgegen einer Steuerfeder, die den Anker auf den Steuerventilsitz drückt, abgehobene Anker mittels des Kerns durch einen Permanentmagneten gehalten wird, wobei der Permanentmagnet in dem Ansteuerungszustand in und/oder an einem Magnethalter gehalten wird, wobei zur Beendigung des Ansteuerungszustands der Permanentmagnet entfernt wird, und/oder b) vor einem Ansteuerungszustand der Anker mittels des Kerns durch einen Permanentmagneten auf den Steuerventilsitz gedrückt wird, wobei die Steuerspule für ein Abheben des Ankers entgegen einer Haltewirkung des Permanentmagneten vom Steuerventilsitz ausgestaltet ist, wobei der Permanentmagnet in und/oder an einem Magnethalter gehalten wird und der Permanentmagnet für einen Übergang in den Ansteuerungszustand entfernt wird, wobei im Ansteuerungszustand der vom Steuerventilsitz abgehobene Anker von einer Steuerfeder gehalten wird, und mit einem Schritt des Einstellens einer durch die Steuerspule zur Erreichung des Ansteuerungszustands aufzubringenden Kraft durch eine variable Positionierung des Kerns entlang einer von der Steuerfeder bewirkten Kraft.

Im vorliegenden Zusammenhang ist "Drücken des Ankers auf den Steuerventilsitz" als ein in Kontakt bringen von Anker und Steuerventilsitz zu verstehen, derart, dass Anker und Steuerventilsitz gemeinsam die zweite Fluidverbindung schließen. Der Begriff "Drücken" bezieht sich hier auf die Bewirkung einer abdichtenden Andruckkraft zwischen Anker und Steuerventilsitz und ist hierbei nicht nur darauf beschränkt zu verstehen, dass der Anker zwischen dem drückenden Element und dem Steuerventilsitz angeordnet wäre und die Kraft, die auf den Anker wirkt, in Richtung auf den Steuerventilsitz gerichtet ist, da die Andruckkraft und damit die gewünschte Abdichtung auch erreicht werden kann, wenn der Anker in den Steuerventilsitz gezogen wird, d.h. bei geeigneter Anordnung eine Kraft auf den Anker wirkt, die vom Steuerventilsitz weg gerichtet ist (vgl. Fig. 2 von EP 0 710 790 B1).

Der Erfindung liegt zum Einen die Erkenntnis zu Grunde, dass mit der Möglichkeit, den Permanentmagneten vom Ventil (bzw. seinem Funktionsort am Ventil) zu entfernen, eine manuelle Schaltung des Ventils verbunden ist. Dient der Permanentmagnet einem Halten des Ankers im Ansteuerungszustand (d.h. in einem Zustand, in dem das Sektionsventil angesteuert wurde und geöffnet ist), so kann durch die Entfernung des Permanentmagneten dieser Ansteuerungszustand aufgehoben werden, so dass das Ventil schließt. Hält der Permanentmagnet im Gegensatz dazu das Ventil geschlossen, kann durch die Entfernung des Permanentmagneten eine Auslösung in einen Ansteuerungszustand erreicht werden. Bei geeignetem Aufbau des Sektionsventils ist es zudem möglich, dass diese Varianten miteinander kombiniert werden.

Zum Anderen wurde erkannt, dass eine variable Positionierbarkeit des Kerns hinsichtlich seiner Eindringtiefe einen variablen Hub des Ankers mit sich bringt, was dazu genutzt werden kann, die gewünschte bzw. benötigte Anzugskraft der Steuerspule anzupassen, da die wirkende Magnetkraft der Spule von der relativen Position von Steuerspule und Anker abhängt.

Hierbei wirkt die Steuerfeder mittelbar oder unmittelbar zwischen Kern und Anker, wobei die Funktion des Steuerventils im Sinne des Öffnen und Schließens der zweiten Fluidverbindung lediglich mit einer Bewegung des Ankers verbunden ist, wobei der Kern zumindest im Wesentlichen an seiner (variabel einstellbaren) Positionierung verharrt.

Das erfindungsgemäße Ventil ist vorzugsweise als Sektionsventil für eine Löschmittelleitung vorgesehen, so dass das Sektionsventil vorzugsweise für einen Druck des Löschmittels im Zulauf im Bereich von 5 bis 400 bar ausgestaltet ist, insbesondere bevorzugt im Bereich von 10 bis 140 bar.

Das Entfernen des Permanentmagneten ist nicht so zu verstehen, dass der Permanentmagnet damit notwendigerweise vollständig vom restlichen Ventil zu trennen wäre. Es ist für das Entfernen ausreichend, wenn der Permanentmagnet von seiner Normalposition, in der er auf den Kern (und damit ggf. mittelbar auf den Anker) wirkt, soweit entfernt wird, dass die Wirkung des Permanentmagneten praktisch beseitigt oder zumindest unter einen Schwellwert reduziert wird, der einer Beseitigung gleichkommt. Hält der Permanentmagneten beispielsweise über den Kern den Anker entgegen der Kraft der Steuerfeder, so ist das Entfernen des Permanentmagneten so zu verstehen, dass der Permanentmagnet vom Kern so weit weg bewegt wird, dass die Kraft der Steuerfeder vom Magneten auf den Anker ausgeübte Haltekraft überschreitet. Selbst bei einer vollständigen Entnahme des Permanentmagneten aus dem Magnethalter kann der Permanentmagnet noch immer mit dem Ventil als solchen gekoppelt sein, beispielsweise über eine Verliersicherung.

In einer Ausführungsform der Erfindung ist das Steuerventil für eine Erzeugung eines Freigabemagnetfelds ausgestaltet, das einer Haltewirkung des Permanentmagneten entgegenwirkt, wobei die Steuerspule und/oder eine Freigabespule zur Erzeugung des Freigabemagnetfelds vorgesehen sind.

Das Freigabemagnetfeld kann einerseits eine Kraftwirkung aufweisen, die in einem räumlich vom Permanentmagneten entfernten Bereich auf den Anker wirkt, und andererseits auch auf das Magnetfeld des Permanentmagneten schwächend einwirken (d.h. sich mit dem Magnetfeld des Permanentmagneten überlagern und es ggf. sogar auslöschen). Auf diese Weise kann durch das Freigabemagnetfeld eine Steuerung des Ventils erreicht werden. Es ist hierbei möglich, auch die Steuerspule selbst bei umgekehrter Stromrichtung für die Erzeugung des Freigabemagnetfelds zu nutzen.

In einer Ausgestaltung der obigen Ausführungsform ist die Freigabespule im Magnethalter vorgesehen.

Bei im Magnethalter vorgesehener Freigabespule kann durch die Ansteuerung (d.h. Strombeaufschlagung) der Freigabespule Einfluss auf die Wirkung des Permanentmagneten genommen werden, so dass dessen Wirkung selektiv aufgehoben oder zumindest so weit wie nötig gemindert wird.

In einer weiteren Ausführungsform, bei der das Ventil den Permanentmagnet und den Magnethalter aufweist, ist der Magnethalter entfernbar vorgesehen.

Es ist nicht notwendigerweise der Fall, dass der Permanentmagnet aus dem oder von dem Magnethalter entfernt oder innerhalb des Magnethalters zur Entfernung verschoben wird, da auch der Magnethalter selbst oder zumindest ein Teil davon entfernbar ausgeführt werden kann. Es ist auch möglich, dass sowohl der Magnethalter entfernbar ist als auch der Magnet aus bzw. von dem Magnethalter entfernt werden kann.

In einer anderen Ausführungsform, bei der die variable Positionierbarkeit des Kerns vorhanden ist, ist der Kern in einer Führungsbuchse des Steuerventils eingeschraubt, eingerastet, eingeklemmt, eingeklebt und/oder mit Distanzstücken positioniert.

Die Führungsbuchse des Steuerventils stellt eine gewünschte Positionierung des Kerns entlang einer durch die von der Steuerfeder bewirkten Kraft definierten (Längs-)Achse sicher, wobei der Kern an unterschiedlichen Positionen (stufenlos oder gestuft) entlang dieser Achse positioniert werden kann, um so beispielsweise den Hub des Ankers auf ein gewünschtes Maß zu bringen.

Es kann hierbei vorgesehen sein, dass nach einer Einstellung einer gewünschten Position der Kern in dieser Position festgelegt wird, beispielsweise durch Schweißen, Kleben, Löten, Verkeilen, Kontern oder andere geeignete Weisen.

In einer Ausgestaltung der vorstehenden Ausführungsform ist durch ein teilweises Herausschrauben oder Lösen des Kerns aus der Führungsbuchse der Anker vom Steuerventilsitz abhebbar.

Wird die variable Positionierbarkeit des Kerns im Einsatzzustand des Ventils beibehalten, kann damit auch die Position des Ankers insofern beeinflusst werden, als dass der Anker vom Kern bei einem Herausschrauben oder anderweitigem Herausbewegen aus der Führungsbuchse mitgenommen und damit vom Steuerventilsitz abgehoben wird. Auf diese Weise ergibt sich eine weitere Möglichkeit, das Ventil manuell zu bedienen.

In einer weiteren Ausgestaltung ist das Steuerventil für ein Einschrauben und/oder Einrasten des Kerns in die Führungsbuchse mit in und/oder an dem Magnethalter gehaltenen Permanentmagneten und ein anschließendes Abheben des durch den Permanentmagneten mittels des Kerns gehaltenen Ankers vom Steuerventilsitz ausgestaltet.

Die Kombination von Permanentmagnet und Kern muss nahe genug an den Anker herangebracht werden, damit die Magnetkraft gegenüber der Kraft der Steuerfeder überwiegt. Bei einer variablen Positionierbarkeit des Kerns kann der Kern (zusammen mit dem Permanentmagneten) zunächst an den Anker herangeführt werden, so dass der Anker am magnetisierten Kern anhaftet, so dass der Anker bei einer Gegenbewegung des Kerns dann mitgenommen werden kann.

Es wird hier zudem ein Ventil zum Schalten von Fluiden beschrieben, insbesondere mit den Merkmalen der vorliegenden Erfindung, wie sie in Anspruch 1 definiert sind, mit einem Arbeitsventilsitz, in den der Arbeitskolben zur Abtrennung von Zulauf und Ablauf, insbesondere durch eine Arbeitsfeder, eindrückbar ist, wobei der Arbeitsventilsitz entlang Arbeitsrichtung des Kolbens (z.B. entlang einer durch die Arbeitsfeder bewirkten Kraft) beweglich ist, wobei der Arbeitsventilsitz zumindest bei mit Druck beaufschlagtem Zulauf und geschlossenem Arbeitsventil für eine Beaufschlagung mit einer Ventilsitzkraft und ein Folgen einer Bewegung des Arbeitskolbens mit in den Arbeitsventilsitz eingedrücktem Arbeitskolben ausgestaltet ist.

Das hier beschriebene Ventil weist vorzugsweise Merkmale auf, die weiter oben und unter Bezug auf die Ausführungsbeispiele hinsichtlich des Steuerventils angegeben und erläutert sind.

Es kann im Betrieb beispielsweise einer Löschanlage vorkommen, dass im Löschmittel Druckstöße auftreten, also kurzzeitige Druckspitzen oder -anstiege. Bei einem herkömmlichen Ventil mit Kolben und Ventilsitz kann es bei einer solchen Druckspitze passieren, dass der Kolben kurzzeitig vom Ventilsitz abgehoben wird, so dass das Ventil zumindest kurzzeitig durchlässig wird.

Es ist erkannt worden, dass ein derartiges Verhalten mit einem beweglichen Arbeitsventilsitz unterdrückt oder gar beseitigt werden kann, da der Arbeitsventilsitz dem durch den Druckstoß bewegten Kolben folgt und damit die ungewollte Durchlässigkeit des Ventils zumindest verringert wird.

In einer Ausgestaltung des zuvor beschriebenen Ventils ist die Ventilsitzkraft durch eine Arbeitsventilfeder und/oder eine Flächendifferenz zwischen einer Stirnfläche des Arbeitsventilsitzes gegenüber dem Arbeitskolben und einer Stirnfläche des Arbeitsventilsitzes gegenüber dem Zulauf bewirkbar.

Insbesondere die Nutzung einer Flächendifferenz zur Bewirkung oder Unterstützung der Ventilsitzkraft ist von Vorteil, da hierbei eine Proportionalität oder zumindest ein proportionaler Anteil der Ventilsitzkraft zur Höhe der Druckspitze erhalten wird, so dass bei einer höheren Druckspitze auch die Ventilsitzkraft größer wird, so dass der Arbeitsventilsitz dem Kolben schneller folgen kann. Die Arbeitsventilfeder kann von Vorteil sein, wenn der anstehende Druck (noch) sehr niedrig ist, um so eine Mindestkraft sicherzustellen. Es ist zu bemerken, dass die "und/oder"-Verknüpfung im vorherigen Absatz so zu verstehen ist, dass damit auf drei Varianten abgestellt wird, nämlich, erstens, dass die Ventilsitzkraft durch eine Kombination der Wirkungen von Arbeitsventilfeder und Flächendifferenz bewirkt wird, zweitens, dass die Ventilsitzkraft durch die Wirkungen der Arbeitsventilfeder (ohne oder gar gegen einen Einfluss einer Flächendifferenz) bewirkt wird, und drittens, dass die Ventilsitzkraft durch die Wirkung der Flächendifferenz (bzw. des sich dadurch ergebenden Differenzdrucks) (ohne oder mglw. auch entgegen einer Federwirkung) bewirkt wird. Hierbei ist es allerdings auch nicht ausgeschlossen, dass durch eine geeignete Ausgestaltung des Ventils sogar zwischen diesen Varianten ohne grundsätzlichen Umbau des Ventils (also insbesondere im Betrieb) umgeschaltet werden kann, auch wenn eine Ausführung ohne derartiges Umschalten wegen des einfacheren Aufbaus vorteilhaft wäre.

Bei einem hier beschriebenen Ventil mit einem beweglichen Arbeitsventilsitz kann die Beweglichkeit des Arbeitsventilsitzes durch einen Hubbereich begrenzt sein, in welchem das Ventil geschlossen bleibt, wobei der Hubbereich insbesondere durch je einen Anschlag oberhalb und unterhalb der Stirnflächen des Arbeitsventilsitzes gebildet werden kann.

Vorzugsweise ist bei dem beweglichen Arbeitsventilsitz zwischen der oberen Stirnfläche des Arbeitsventilsitzes und der Stirnfläche des Arbeitskolbens, die auf den Zulauf gerichtet ist, eine Dichtung angeordnet.

Ferner wird hier ein Ventil zum Schalten von Fluiden beschrieben, insbesondere mit den Merkmalen der vorliegenden Erfindung, wie sie in Anspruch 1 definiert sind, und/oder mit den Merkmalen, die hier hinsichtlich des entlang der von der Arbeitsfeder bewirkten Kraft beweglichen Arbeitsventilsitzes aufgeführt sind, wobei das Ventil einen Fluidflusssignalgeber mit einer Buchse und einem in der Buchse geführten Signalkolben mit einer Ablaufstirnfläche aufweist, an der ein im Ablauf des Ventils herrschender Druck ansteht, wobei der Signalkolben durch eine Signalfeder im drucklosen Zustand in einer Ruheposition gehalten wird und a) der Signalkolben sich durch die Buchse hindurch nach außen erstreckt, so dass von außen eine Position des Signalkolbens erkennbar ist, und/oder b) das Ventil ein Erfassungsmittel zur Erfassung einer vorbestimmten Abweichung des Signalkolbens von der Ruheposition aufweist.

Das hier beschriebene Ventil weist vorzugsweise Merkmale auf, die weiter oben im Allgemeinen und unter Bezug auf die Ausführungsbeispiele hinsichtlich des Steuerventils angegeben und erläutert sind, sowie solche die hier bezüglich des beweglichen Arbeitsventilsitzes dargestellt sind.

Konventionelle Ventile zum Schalten von Fluiden wie etwa Sektionsventile sehen keine integrierte Zustandsdarstellung vor, so dass mit Blick nur auf den Bereich von Zulauf, Ventil und Ablauf nicht sofort erkannt werden kann, ob ein Ansteuerzustand (also ein geöffnetes Ventil) vorliegt. Eine Möglichkeit, eine Zustandsdarstellung zu erreichen, besteht darin, das zur Ansteuerung genutzte Signal anzuzeigen bzw. darzustellen, dass das Steuersignal erhalten wurde. Damit ist aber noch nicht sichergestellt, dass diese Zustandsdarstellung auch dem tatsächlichen Zustand entspricht, da auch bei empfangenen Ansteuersignal beispielsweise eine mechanische Fehlfunktion im Ventil selbst verhindern kann, dass das Arbeitsventil auch tatsächlich geöffnet ist.

Mit dem Signalkolben, der den Druck innerhalb des Ablaufs des Ventils erfährt, kann in einfacher Weise eine solche Zustandsdarstellung verwirklicht werden.

Es ist zu bemerken, dass die oben erwähnte Buchse nicht notwendigerweise ein vom Ventilkörper o.ä. separates Bauteil sein muss. Der Begriff "Buchse" umfasst zwar auch ein solch separates, in den Ventilkörper o.ä. eingebautes Bauteil, wird aber auch schon durch eine Öffnung (z.B. Bohrung) im Ventilkörper oder Gehäuse des Ventils verwirklicht. Mit anderen Worten kann man, im Fall einer solchen Öffnung oder Bohrung, das Gehäuse des Ventils oder den Ventilkörper selbst als die Buchse betrachten.

In einer Ausgestaltung des zuvor beschriebenen Ventils erfolgt die Erfassung der vorbestimmten Abweichung durch ein Schließen und/oder Öffnen eines mechanischen, elektrischen, magnetischen und/oder optischen Kontakts bei wenigstens der vorbestimmten Abweichung des Signalkolbens von der Ruheposition.

Als Erfassungsmittel kommen jedwede Elemente oder Einheiten in Frage, mit denen die vorbestimmte Abweichung erfasst werden kann, hierzu zählen insbesondere mechanische oder elektromechanische Schalter, elektrische Kontakte (deren Kontaktierung durch die Abweichung geschlossen oder geöffnet wird), Reed-Kontakte, Hall-Sonden oder Lichtschranken.

In einer weiteren Ausgestaltung des obigen Ventils, weist der Signalkolben eine Abdichtung gegenüber der Buchse auf, die sich zwischen Ablauf und Signalfeder und/oder in einer Außenwandung der Buchse befindet.

Bei einer Abdichtung des Ablaufs gegenüber der Signalfeder wird die Signalfeder nicht dem Löschmittel (oder anderem Fluid, das durch das Ventil strömt und/oder im Ablauf vorliegt) ausgesetzt, während eine (alternative oder zusätzliche) Abdichtung zwischen dem Signalkolben und der Buchse in der Außenwand der Buchse ebenfalls möglich ist.

In einer weiteren Ausgestaltung des obigen Ventils ist der Signalkolben, insbesondere bei drucklosem Ablauf, durch eine Krafteinwirkung von außen in Richtung des Ablaufs und/oder entgegen dieser Richtung zur Funktionsüberprüfung bewegbar.

Durch eine entsprechende Betätigung von außen, etwa durch einen Benutzer, der die Funktionalität des Signalkolbens und mittelbar dann auch des Ventils prüfen möchte, kann der Signalkolben nach außen gezogen und/oder in das Ventil gedrückt werden, so dass eine eventuelle Blockierung oder anderweitige Betriebsbeeinträchtigung erkannt werden kann.

In einer weiteren Ausgestaltung des Ventils sind Signalkolben und Signalfeder so dimensioniert, dass bei einem vorbestimmten Druck im Ablauf der Signalkolben mit der Buchse in Anschlag kommt.

Einerseits kann das in Anschlag kommen von Signalkolben und Buchse als Anzeige dafür genutzt werden, dass der vorbestimmte Druck erreicht wurde bzw. vorliegt, wobei eine entsprechende Markierung oder Kennzeichnung beispielsweise eine einfachere Erkennung des Anschlags ermöglichen kann. Der Anschlag selbst kann wiederum, wie auch jede Zwischenposition, als Beispiel einer vorbestimmten Abweichung des Signalkolbens von einer Ruheposition durch das Erfassungsmittel erfasst werden.

Andererseits kann der Anschlag, wenn eine entsprechende Dichtung o.ä. im Bereich des Anschlags vorgesehen ist, auch dazu genutzt werden, eine zusätzliche Dichtwirkung zu erreichen, die oberhalb des vorbestimmten Drucks nötig ist oder wünschenswert wäre.

Im Folgenden wird die Erfindung anhand bevorzugter Ausführungsbeispiele unter Bezug auf die beiliegenden Zeichnungen näher erläutert. Hierbei zeigt
- Fig. 1: ein erstes Ausführungsbeispiel eines erfindungsgemäßen Sektionsventil im Ruhezustand,
- Fig. 2: ein zweites Ausführungsbeispiel eines erfindungsgemäßen Sektionsventil, vergleichbar zu dem aus Fig. 1, im Ansteuerungszustand, und
- Fig. 3: ein Ausführungsbeispiel eines erfindungsgemäßen Verfahrens zur Steuerung eines Ventils zum Schalten von Fluiden am Beispiel eines Sektionsventils.

In der folgenden Diskussion der Ausführungsbeispiele der Erfindung wird ein erfindungsgemäßes Sektionsventil dargestellt. Es ist hierbei zu bemerken, dass die Diskussionen des flexiblen Ventilsitzes des Arbeitsventils und der Signalisierungseinrichtung auch unabhängig von den Details des Steuerventils des Sektionsventils zu verstehen sind, auch wenn diese Ausführungen als bevorzugte und vorteilhafte Ausführungsbeispiele der Erfindung beschrieben sind.

Das als Ausführungsbeispiel diskutierte Sektionsventil besitzt einen flexiblen Arbeitsventilsitz und sein Steuerventil ist als Impulsventil so ausgestaltet, dass nach einem ansteuerenden Signal (oder Impuls) das Ventil geöffnet bleibt, auch wenn zwischenzeitlich der Strom ausfällt.

Der Begriff "flexibler Arbeitsventilsitz" ist hier mit Blick auf eine Beweglichkeit oder Verschiebbarkeit des Arbeitsventilsitzes zu verstehen und richtet sich nicht darauf, dass der Arbeitsventilsitz als solcher notwendigerweise aus einem elastischen Material oder Ähnlichem bestehen würde. Die Flexibilität des Arbeitsventilsitzes besteht im vorliegenden Kontext darin, dass das Sektionsventil als Ganzes und insbesondere der Arbeitsventilsitz dazu ausgestaltet sind, dass der Arbeitsventilsitz nicht starr an einer Position fixiert ist, sondern flexibel und beweglich dem Arbeitskolben folgen kann.

Als "Ruhezustand" des Sektionsventils wird hier der Zustand bezeichnet, bei dem der Löschmittelfluss nicht freigegeben ist und auch kein Ansteuerungssignal (etwa ein Feueralarmsignal bei einer Anwendung in einer Feuerlöschanlage) vorliegt bzw. vorlag und noch nachwirkt. Im Gegensatz dazu ist der "Ansteuerungszustand" der Zustand, bei dem ein Ansteuerungssignal vorliegt bzw. vorlag und noch nachwirkt, um den Löschmittelfluss freizugeben, also eine fluidführende Verbindung zwischen Zulauf (Fluideintrittskanal) und Ablauf (Fluidaustrittskanal) herzustellen. Für den Ansteuerungszustand ist es bei der vorliegenden Erfindung nicht notwendig, dass das Ansteuerungssignal fortdauernd anliegt.

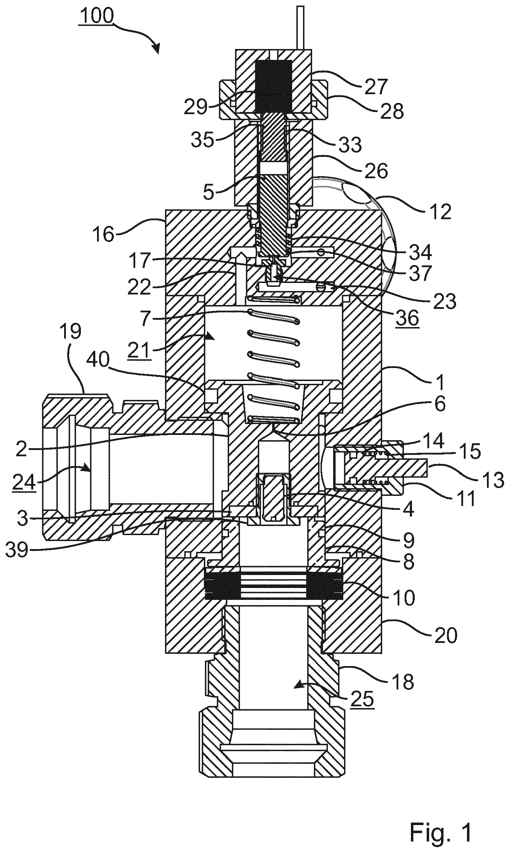

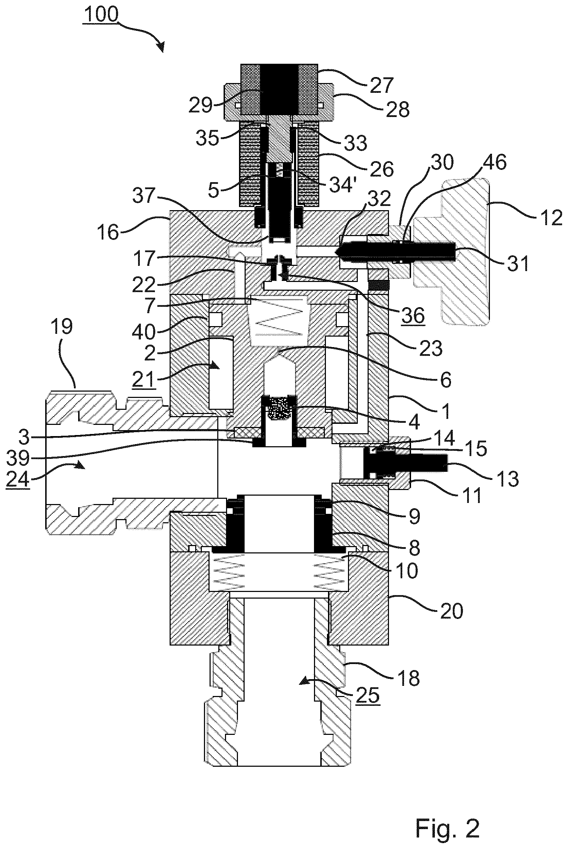

Fig. 1 zeigt ein erfindungsgemäßes Sektionsventil 100 im Ruhezustand, während Fig. 2 eine geringfügig andere Darstellung des vornehmlich hinsichtlich einer Handauslösung modifizierten Sektionsventils 100 im Ansteuerungszustand zeigt.

Das erfindungsgemäße Sektionsventil 100 gemäß dem ersten und zweiten Ausführungsbeispiel umfasst vier Baugruppen: ein Arbeitsventil mit flexiblem Arbeitsventilsitz 8, ein Steuerventil, einen Fluidflusssignalgeber als Druckanzeige bzw. Indikator einer Öffnung des Sektionsventils und eine Handauslösung.

Das Arbeitsventil umfasst einen Ventilkörper 1, einen Arbeitskolben 2 in einem Kolbenraum 21 des Ventilkörpers, einen oberen Ventildeckel 16, einen unteren Ventildeckel 20, einen Eingangsstutzen 18, einen Ausgangsstutzen 19, eine als Druckfeder ausgeführte Arbeitsfeder 7, ein druckhaltendes Kanalnetz 22 und ein druckentlastendes Kanalnetz 23.

Der obere und der untere Ventildeckel 16, 20 (die Bezeichnungen "untere" und "oberer" dienen nur dem Bezug auf die Figuren und sind nicht als Beschränkung zu verstehen) sind am Ventilkörper 1 mit Schrauben (nicht dargestellt) wasserdicht und gasdicht befestigt.

Der Eingangsstutzen 18 und der Ausgangsstutzen 19 sind jeweils im Ventilkörper 1 eingeschraubt / geflanscht.

Der Arbeitskolben 2 wird im Kolbenraum 21 geführt. Eine Dichtung 40 dichtet den Arbeitskolben 2 gegenüber der Innenwand des Kolbenraums 21 ab.

Eine weitere Dichtung 3, die mit dem Arbeitsventilsitz 8 zusammenwirkt, wird mit einer Befestigungsbuchse 39 am Arbeitskolben 2 gehaltert.

Eine Drosselbohrung 6, die den kleinsten Querschnitt aller im Sektionsventil vorhandener Bohrungen aufweist, verbindet den Zulauf 25 mit dem Kolbenraum 21 (und darüber mit einem druckhaltenden Kanalnetz 22). In der Befestigungsbuchse 39 ist eine Siebvorrichtung 4 eingebaut, mit der verhindert wird, dass Verunreinigungen o.ä. aus der Zuleitung die Drosselbohrung 6 verstopfen.

Der Ventilkörper 1 und der obere Ventildeckel 16 sind so ausgeführt, dass sie ein druckhaltendes Kanalnetz 22 und ein druckentlastendes Kanalnetz 23 aufweisen, die im nicht angesteuerten Zustand getrennt sind und die im Ansteuerungszustand miteinander in Fluidverbindung stehen.

Mit geeigneten Aussparungen im oberen Ventildeckel 16 und im Arbeitskolben 2 wird die als Druckfeder ausgeführte Arbeitsfeder 7 gehaltert und geführt, die den Arbeitskolben 2 auf den Arbeitsventilsitz 8 drückt.

Das Steuerventil umfasst einen Steuerventilsitz 17, eine Führungsbuchse 33, einen Anker 5, einen Permanentmagneten 29, eine Steuerspule 26 um die Führungsbuchse 33, eine Freigabespule 27 um dem Permanentmagneten 29, einen Magnethalter 28, einen magnetisierbaren Kern 35 aus magnetisierbarem Material, eine Steuerfeder 34, 34' und eine Ankerdichtung 37 im Anker 5.

Fig.1 zeigt eine Variante, in der sich die Steuerfeder 34 am oberen Ventildeckel 16 bzw. einer Buchse des Steuerventils im oberen Ventildeckel 16 abstützt, während Fig. 2 eine Variante zeigt, bei der die Steuerfeder 34' in den Anker 5 eingelassen ist und zwischen dem Anker 5 und dem Kern 35 wirkt.

Die Führungsbuchse 33 ist im oberen Ventildeckel 16 wasserdicht/gasdicht angebracht und führt die axiale Bewegung des Ankers 5. Im oberen Bereich der Führungsbuchse 33 ist der Kern 35 wasserdicht /gasdicht montiert. Die Steuerspule 26 ist um die Führungsbuchse 33 montiert und wird durch den am Kern 35 angeschraubten Magnethalter 28 in stabiler Lage zwischen dem Magnethalter 28 und dem oberen Ventildeckel 16 gehalten.

Der Magnethalter 28 hält den Permanentmagneten 29 und die Freigabespule 27 fest. Der Kern 35 steht in Berührungskontakt mit dem Permanentmagneten 29, so dass der Permanentmagnet 29 sein Magnetfeld um die Länge des Kerns 35 erweitert.

Der Steuerventilsitz 17 hat eine Bohrung 36, die durch die Wirkung der als Druckfeder ausgeführten Steuerfeder 34 auf den Anker 5 und die Dichtung 37 abgedichtet wird. Beim nicht angesteuerten Zustand trennt also die Dichtung 37 das drucktragende Kanalnetz 22 vom druckentlastenden Kanalnetz 23 ab, so dass die zweite Fluidverbindung (die sich hier aus der Kombination von drucktragendem Kanalnetz 22 und druckentlastendem Kanalnetz 23 ergibt) geschlossen (also nicht fluiddurchlässig) ist.

Der Fluidflusssignalgeber umfasst eine Buchse 11, einen Signalkolben 13, eine Abdichtung 14 und eine Signalfeder 15. Der Signalkolben 13 wird in der Buchse 11 geführt und mit der Abdichtung 14 abgedichtet. Die Buchse 11 ist im Ventilkörper 1 wasserdicht/gasdicht montiert. Eingangsseitig ist die Buchse mit dem Ablauf 24 verbunden. Wenn der Ablauf 24 drucklos ist (also im Ruhezustand), bringt die Signalfeder 15 den Signalkolben 13 in seine Ruhestellung.

Die Handauslösung umfasst eine Gewindebuchse 30, einen Gewindebolzen 31 und einen Griff 12. Die Gewindebuchse 30 ist im oberen Ventildeckel 16 wasserdicht/gasdicht eingebaut. In der Gewindebuchse 30 ist der Gewindebolzen 30 einschraubt und wird mit der Dichtung 46 abgedichtet. Der Gewindebolzen 30 ist mit einem Abdichtkonus 32 und am Gewindebolzen ist der Griff 12 vorgesehen.

Die Handauslösung stellt eine zum Steuerventil parallele Möglichkeit dar, eine Fluidverbindung zwischen dem druckhaltenden Kanalnetz 22 und dem druckentlastenden Kanalnetz 23 herzustellen. Im vollständig eingeschraubten Zustand des Gewindebolzens 30 schließt der Abdichtkonus 32 (neben der Ankerdichtung 37) des Kanalnetzes 22 vom Kanalnetz 23 ab.

Die Ausführungsbeispiele der Fig. 1 und 2 unterscheiden sich vornehmlich durch die Anordnung der Handauslösung. Wie in Fig. 2 erkennbar, ist dort die Handauslösung im Wesentlichen auf der dem Ausgangsstutzen 19 gegenüberliegenden Seite des Ventils 100 angeordnet, während im in Fig. 1 dargestellten Ausführungsbeispiel eine abweichende Variante vorliegt, bei der Griff 12 (die weiteren Elemente der Handauslösung sind in Fig. 1 der Übersichtlichkeit halber nicht weiter gesondert gekennzeichnet bzw. dargestellt) auf einer dem Ausgangsstutzen benachbarten Seite des Ventils 100 angeordnet ist, wobei dementsprechend auch die Details des druckentlastenden Kanalnetzes 23 anders sind. Da der Fachmann aber im Grundsatz mit Handauslösungen dieser Art vertraut ist, kann auf weitere Erläuterungen verzichtet werden. Es sei dennoch erwähnt, dass infolge der abweichenden Führung des druckentlastenden Kanalnetzes 23 dessen Verbindung zum Kolbenraum 21 in Fig. 1 nicht dargestellt ist (d.h. außenhalb der Zeichnungsebene vorliegt).

Die Unterbaugruppe des flexiblen Ventilsitzes umfasst den Arbeitsventilsitz 8, eine Dichtung 9 und eine Arbeitsventilfeder 10.

Der Arbeitsventilsitz 8 wird im Ventilkörper 1 geführt. Die Dichtung 9, die zwischen den Arbeitsventilsitz 8 und einer Wandung des Ventilkörpers 1 vorgesehen ist, dichtet diese Führung des Arbeitsventilsitzes 8 ab. Im nicht angesteuerten Zustand dichtet der Arbeitsventilsitz 8 mit der Dichtung 3 den Zulauf 25 vom Ablauf 24 und trennt diese voneinander ab. Der Arbeitsventilsitz 8 besitzt einen Bewegungsbereich zwischen einer vollständigen Komprimierung der Arbeitsventilfeder 10 und einem Anschlag im Ventilkörper 1. Durch die Nachgiebigkeit der Arbeitsventilfeder 10 kann der Arbeitsventilsitz 8 vom Arbeitskolben 2 also um einen gewissen Hub bewegt werden bzw. kann der Arbeitsventilsitz 8 dem Arbeitskolben 2 bis zum Anschlag folgen.

In den in Fig. 1 und 2 dargestellten Ausführungsbeispielen ist das Arbeitsventil jeweils mit der Arbeitsventilfeder 10 versehen, die die Ventilsitzkraft aufbringt, mit der der Arbeitsventilsitz 8 auf den Arbeitskolben 2 aufgedrückt wird bzw. ein Ausweichen des Arbeitsventilsitzes 8 beim Eindrücken des Arbeitskolbens 2 in den Arbeitsventilsitz 8 verhindert wird. Es ist alternativ ebenfalls möglich, die Ventilsitzkraft im Betriebszustand durch eine Flächendifferenz zwischen gegenüberliegenden Stirnflächen eines (hier nicht so dargestellten) Arbeitsventilsitzes, der im Ventilkörper geführt ist, zu bewirken. Im Betriebszustand liegt im Zulauf 25 ein Druck vor. Sind die zur Längsrichtung der Führung des Arbeitsventilsitzes senkrechten Stirnflächen, die jeweils dem im Zulauf herrschenden Druck ausgesetzt sind, unterschiedlich groß, ergibt eine resultierende Differenzkraft, die als Ventilsitzkraft genutzt werden kann. Die Größe der dem Druck ausgesetzten Stirnfläche ist als die Größe einer projizierten Fläche zu verstehen, die sich durch die Projektion der dem Druck ausgesetzen Oberflächen auf einer zur jeweiligen Richtung senkrechte Ebene ergibt.

Wird die Ventilsitzkraft allein auf Basis der Flächendifferenz der druckbeaufschlagten Stirnflächen bewirkt, wird der Arbeitventilsitz bevorzugt so im Ventilkörper geführt, dass zwei Anschläge vorhanden sind, ein erster Anschlag (wie auch in den Fig. 1 und 2 erkennbar), der ein Nachlaufen des Arbeitsventilsitzes nach dem Arbeitskolben beschränkt (da andernfalls das Sektionsventil nicht zu öffnen wäre) und ein zweiter Anschlag, der dem ersten Anschlag gegenüberliegt, mit dem der Führungsweg des Arbeitsventilsitzes im Ventilkörper in Gegenrichtung beschränkt wird, so dass der Arbeitsventilsitz verliersicher im Ventilkörper gehalten wird. Unter Umständen kann aber auf den zweiten Anschlag verzichtet werden, wenn ein Verlieren des Arbeitsventilsitzes etwa wegen anderer Maßnahmen nicht zu befürchten wäre.

Bei jeder hydraulischen Anlage können aus verschiedenen Gründen unerwünschte hydraulische Stöße entstehen. Diese Stöße können zur Folge haben, dass mechanische Komponenten der Anlage derartig beansprucht werden, dass diese Fehlverhalten zeigen. Ein Fehlverhalten eines konventionellen Sektionsventils könnte z.B. sein, dass durch einen Stoß ein kurzzeitiges Anheben des Kolbens auftritt, was zum Öffnen des Sektionsventils führt.

Der flexible Arbeitsventilsitz 8 hat die Aufgabe, Stoßhübe des Arbeitskolbens 2 zu kompensieren und das Sektionsventil 100 somit bis zu einem gewünschten Hubmaß geschlossen zu halten.

Dieses wird erreicht, indem der Arbeitsventilsitz 8 durch die Kraftwirkung der Arbeitsventilfeder 10 dem Arbeitskolben 2 um das gewünschtes Maß nacheilt und weiterhin eine Druckkraft auf die Dichtung 3 ausübt und somit das Sektionsventil geschlossen bleibt und keine fluidleitende Verbindung zwischen dem Zulauf 25 und dem Ablauf 24 besteht.

Der bewegliche Arbeitsventilsitz 8 weist, wie schon oben diskutiert, den Vorteil auf, dass Druckschwankungen im Zulauf 25 nicht oder in stark verringertem Maße dazu führen, dass das Sektionsventil 100 durchlässig wird, da der Arbeitsventilsitz 8 dem Arbeitskolben 2 auch im Fall einer Druckspitze folgt und somit einen geschlossenen Zustand des Sektionsventils 100 aufrechterhält.

Bei einer Anwendung des Sektionsventils in einer Wasserlöschanlage (Löschanlage mit Wasser oder wasserbasiertem Löschmittel als Fluid) wird das Rohrnetz (nicht dargestellt) in Schutzbereiche aufgeteilt, wobei jeder Bereich durch wenigstens ein Ventil (dann auch als Bereichsventil bezeichnet) abgetrennt wird. Das Löschmittel wird üblicherweise von einer Vorratsstelle durch eine Verteilerleitung mit solchen Ventile in verschiedenen Brandschutzsektionen geleitet. Wenn eine Pumpe zur Aufrechterhaltung des am Zulauf anliegenden (und gewünschten) Drucks p₁ im Ruhezustand Fluid mit Druck p₂ plus Druckspitze auf den Weg schickt, kann bei es herkömmlichen Sektions- oder Bereichsventilen passieren, dass sich ein oder mehrere nicht angesteuerte Ventile öffnen. Im Kontext der vorliegenden Erfindung wird dieses Öffnen (zumindest für eine Druckspitze Δ₁) durch den beweglichen Arbeitsventilsitz 8 verhindert, auch wenn die Druckstöße ein Vielfaches des normalen Betriebsdrucks ausmachen.

Der Druck p₁ im Ruhezustand kann beispielsweise 140 bar betragen und wird von einer Ruhedruckhaltepumpe gehalten (Regelung ca. 2 bar).

Im Ruhezustand ist das Sektionsventil 100 geschlossen. Im Zulauf 25 herrscht Druck p₁. Durch die von der Drosselbohrung 6 gegebene Fluidverbindung zwischen Zulauf 25 und Kolbenraum 21 herrscht damit auch im Kolbenraum 21 der Druck p₁. Durch die größere erste Druckwirkfläche des Arbeitskolbens 2, welche im Kolbenraum 21 angeordnet ist, hält die resultierende Kraft auf die erste Druckwirkfläche, die größer ist als die Kraft auf die zweite Druckwirkfläche des Arbeitskolbens 2 im Zulauf 25, den Arbeitskolben 2 in der Ruhestellung. In dieser Ruhestellung besteht keine fluidleitende Verbindung zwischen dem Zulauf 25 und dem Ablauf 24.

Damit das Sektionsventil 100 öffnet, d.h. eine fluidleitende Verbindung zwischen dem Zulauf 25 und dem Ablauf 24 hergestellt wird, wird der Arbeitskolben 2 von seinem Arbeitsventilsitz 8 abgehoben. Hierzu wird im Kolbenraum 21 ein Druckabfall herbeigeführt, und zwar durch Öffnung einer zweiten Fluidverbindung durch das Steuerventil, das zwischen dem druckhaltendem Kanalnetz 22 (das mit dem Kolbenraum 21 in ständiger Verbindung ist) und dem druckentlastenden Kanalnetz 23 (das mit dem Ablauf 24 in ständiger Verbindung ist, aber auch zu einem gesonderten Reservoir unabhängig vom Ablauf 24 führen kann) wirkt. Zur Öffnung des Steuerventils wird der Anker 5 vom Steuerventilsitz 17 abgehoben, so dass zwischen den Kanalnetzen 22 und 23 Fluidverbindung hergestellt wird.

Erfindungsgemäß ist der Permanentmagnet 29 entfernbar (vorzugsweise auch austauschbar). Das Steuerventil (in Form eines Magnetventils) ist derart ausgebildet, dass es mit einer Anker-Haltevorrichtung (AH) oder "Anker-Halte-und-Steuervorrichtung" (AHS) nach einem Baukastenprinzip ausgerüstet werden kann, wobei vorzugsweise eine Umrüstbarkeit zwischen AH und AHS besteht.

Der Unterschied zwischen AH und AHS besteht darin, dass die Anker-Halte-und-Steuervorrichtung gegenüber der einfacheren Anker-Haltevorrichtung (nicht dargestellt) mit einer weiteren Spule (Freigabespule 27) zur Unterdrückung der Wirkung des Permanentmagneten 29 ausgerüstet ist.

Bei einem konventionellen Magnetventil (nicht dargestellt) ohne Anker-Haltevorrichtung ist das Ventil nur bei an der Steuerspule fließendem Strom ausreichender Stärke geöffnet, da ohne Stromfluss der Anker von der Steuerfeder auf den Steuerventilsitz gedrückt wird. Bei Stromausfall oder Abschaltung des Stroms ist ein konventionelles Magnetventil ohne Anker-Haltevorrichtung daher geschlossen. In der Brandschutztechnik wird dagegen gewünscht, dass nach einer eingeleiteten Löschung die angesteuerten Sektionsventile auch weiterhin angesteuert bleiben, selbst dann, wenn eine Energieversorgung durch Brandschaden nicht mehr gewährleistet werden kann, so dass der Löschvorgang weiterhin sichergestellt werden kann.

Wird die Anker-Haltevorrichtung (also hier der Permanentmagnet 29 im Magnethalter 28) vorgesehen, bleibt der Anker 5 am Permanentmagneten 29 (genauer mittelbar über den Kern 35) bei Öffnung (Ansteuerungszustand) haften, sofern das Stromsignal an der Steuerspule 26 für eine ausreichende Abhebung des Ankers 5 vom Steuerventilsitz 17 (bzw. eine ausreichende Annäherung des Ankers 5 an den Kern 35), d.h. das Steuerventil bleibt bei auch Stromausfall offen. Bei mechanischer (manueller) Entfernung des Permanentmagneten 29 (beispielsweise nach erfolgter Löschung) geht das Steuerventil wieder in die geschlossene Stellung. Der Permanentmagnet 29 hat hier also die Funktion einer Anker-Haltevorrichtung (AH).

Die in Fig. 1 und 2 dargestellten Ausführungsbeispiele umfassen über die Ausgestaltung einer Anker-Haltevorrichtung hinaus auch noch die Funktion einer Anker-Halte-und-Steuervorrichtung.

Wie schon bei der Anker-Haltevorrichtung haftet auch in dieser Version der Anker 5 am Permanentmagneten 29 (bzw. dem durch den Permanentmagneten 29 magnetisierten Kern 35) zunächst nach Öffnung des Ventils, wobei auch eine manuelle Entfernung des Permanentmagneten 29 zu einem Schließen des Steuerventils führt. Zusätzlich kann durch Stromfluss durch die Freigabespule 27 (Schaltsignal "Ventil zu") ein kompensierendes Magnetfeld erzeugt werden, das den Anker 5 freigibt. (bi-stabiles Magnetventil). Aber auch hier bleibt dieses Ventil bei Stromausfall in geöffneter Stellung.

In einer anderen Ausführungsform der Erfindung kann auch vorgesehen sein, dass die Verhältnisse von geöffneter Stellung und geschlossener Stellung des Steuerventils vertauscht sind, so dass ein derartiges Ventil im Ruhezustand in geöffneter Stellung wäre und durch den Magneten bei geschlossener Stellung dort gehalten würde.

Bei den in Fig. 1 und 2 illustrierten Ausführungsbeispielen ist der Kern 35 in die Führungsbuchse 33 eingeschraubt, das heißt, dass der Kern 35 in einer beliebigen Einschraubtiefe (variabel) positioniert werden kann.

Eine Dichtheit des Kerns 35 zur Führungsbuchse 33 wird hier durch eine O-Ringdichtung (nicht dargestellt), die im Kern 35 mitgeführt wird, gewährleistet, unabhängig davon in welcher Stellung (Einschraubtiefe) der Kern 35 in der Führungsbuchse 33 positioniert wird.

Durch diese Eigenschaft (der Kern 35 ist in der Einschraubtiefe variabel), wird der Hub des Ankers 5 auch variabel. Da die Magnetkraft der Steuerspule 26 analog zur Position des Ankers 5 wirksam ist, heißt dies, dass man durch Bestimmung des Anker-Hubes auch die gewünschte Anzugskraft der Steuerspule 26 variabel wählen kann. Das hat mittelbar einen Einfluss auf eine Festlegung der Bohrungsgröße des Steuerventilsitzes 17, auf den der Anker 5 durch den hydraulischen Druck wirkt und abdichtet, und auf die Festlegung des Durchflusses in Abhängigkeit vom Hub.

Das Sektionsventil des ersten und des zweiten Ausführungsbeispiels umfasst einen Fluidflusssignalgeber. Die Baugruppe des Fluidflusssignalgebers (Buchse 11, Signalkolben 13, Abdichtung 14, Signalfeder 15) hat die Funktion, bei Freigabe der fluidleitenden Verbindung vom Zulauf 25 zum Ablauf 24 den Fluidfluss bzw. das Anliegen des Drucks zu signalisieren. Im Ruhezustand ist der Signalkolben 13 in Ruheposition. Im Auslösezustand (Fluid fließt) wird durch Druck des Fluids auf die Stirnseite des Signalkolbens 13 (gegen die Kraft der Signalfeder 15) der Signalkolben 13 in eine Signalisierungsposition geschoben (optische Anzeige, Kontakt-Auslösung, usw.).

Ein Vorteil dieses mechanischen (auf Druck- bzw. Schubbewegung ansprechenden) Fluidflusssignalgebers liegt in der Möglichkeit, von außen, ohne Entleerung der fluidführenden Komponenten die Funktionsfähigkeit durch manuelles "Drücken" (oder Ziehen) des Signalkolbens 13 zu testen (Sperrung der Feder, defekte Feder durch Bruch/Korrosion).

Im nicht angesteuerten Zustand, der in Fig. 1 schematisch dargestellt ist, wirkt im Zulauf 25, in der Drosselbohrung 6, im Kolbenraum 21 und im druckhaltenden Kanalnetz 22 der Betriebsdruck, z.B. 140 bar.

Der Ablauf 24 ist drucklos, wenn dieser üblicherweise mit druckentlastenden offenen Düsenrohrnetzen verbunden ist. Bei diesen Ausführungsbeispielen ist das druckentlastende Kanalnetz 23 mit dem Ablauf 24 verbunden, so dass es damit ebenfalls drucklos ist.

Der Arbeitskolben 2 presst den Arbeitsventilsitz 8 um einen Hub gegen die Arbeitsventilfeder 10 und dichtet mit der Dichtung 3 den Zulauf 25 und den Ablauf 24 von einander ab.

Durch die Wirkkraft des Drucks im druckhaltenden Kanalnetzes 22 und der als Druckfeder ausgeführten Steuerfeder 34 auf den Kern 5 bzw. die Ankerdichtung 37 wird die Bohrung 36 des Steuerventilsitzes 17 abgedichtet, so dass das druckführende Kanalnetz 22 und das druckentlastende Kanalnetz 23 voneinander getrennt sind.

Der Signalkolben 13 des Fluidflusssignalgebers ist in seiner drucklosen Ruhelage.

Durch den Abdichtkonus 32 werden das druckhaltende Kanalnetz 22 und das druckentlastende Kanalnetz 23 an einer zweiten Stelle voneinander abgedichtet bzw. getrennt.

Bei beispielsweise einer Branderkennung in einer Brandsektion, wird über eine Steuerzentrale (nicht dargestellt) (beispielsweise Brandmelder- und/oder Löschsteuerzentrale) die Steuerspule 26 angesteuert. Die Steuerspule 26 erzeugt dann ein Magnetfeld, das den Anker 5 gegen die Steuerfeder 34 auf Anschlag zum Kern 35 bewegt. Der Anker 5 bleibt auf dem Kern 35 haften, auch wenn der Strom an der Spule 26 abgestellt würde. Durch die Freigabe der Bohrung 36 wird der Druck vom Kolbenraum 21 über die dann bestehende Fluidverbindung aus den Kanalnetzen 22 und 23 zum drucklosen Ablauf 24 rasch abgebaut, da die Drosselbohrung nicht in der Lage ist, durch die Fluidverbindung auflaufendes Löschmittel nachströmen zu lassen.

So entsteht am Arbeitskolben eine resultierende Kraft, die den Arbeitskolben 2 (und den dem Kolben zunächst folgenden Arbeitsventilsitz 8) in der Durchflussrichtung bewegen lässt, bis schließlich der Arbeitskolben 2 nach dem gemeinsamen Hub den Arbeitsventilsitz 8 verlässt und die Trennung der Fluidkammern 24 und 25 aufhebt. Das Sektionsventil 100 ist damit geöffnet.

Der Signalkolben 13 des Fluidflusssignalgebers wird mit Druck beaufschlagt und wird auf Anschlag zur Buchse 11 gegen die Federkraft der Signalfeder 15 geschoben.

Die Stromversorgung der Steuerspule 26 wird spätestens bei Beendigung des Löschvorganges abgestellt, das Magnetfeld der Steuerspule 26 wird damit aufgehoben.

Durch mindestens einen kurzzeitigen Stromimpuls an der Freigabespule 27 wird um den Permanentmagneten 29 ein entgegenwirkendes Magnetfeld aufgebaut, das die Haftkraft des Permanentmagneten 29 und des Kerns 35 aufhebt oder zumindest einschränkt. Der Anker 5 wird so freigegeben und durch die Wirkung der Druck- und Federkraft der Steuerfeder 34 schließt der Anker 5 die Bohrung 36.

Durch die Drosselbohrung 6 hindurch wird im Kolbenraum 21 wieder der Betriebsdruck aufgebaut, der Arbeitskolben 2 bewegt sich wieder auf den Arbeitsventilsitz 8 zu, und presst dem Ventilsitz 8 um einen Hub nieder.

Das Sektionsventil 100 ist damit wieder geschlossen.

Der Signalkolben 13 kehrt durch die Federkraft der Signalfeder 15 in seine Ruhestellung zurück.

Bei Bedarf wird das Sektionsventil 100 manuell angesteuert (hier manuell geöffnet). Durch Drehen des Griffs 12 bzw. des Gewindebolzens 31 öffnet der Dichtkegel 32 das drucktragende Kanalnetz 22 zum druckentlastendem Druckkanalnetz 23 und das Ventil öffnet wie oben beschrieben. Durch entgegengesetztes Drehen des Griffs schließt der Dichtkegel 32 das drucktragende Kanalnetz 22 wieder ab und das Ventil schließt wie oben beschrieben.

Anstelle des oben beschriebenen Schließvorgangs durch Nutzung der Freigabespule 27 kann auch der Permanentmagnet 29 selbst soweit vom Kern 35 entfernt werden, dass die Kraft der Steuerfeder 34, 34' überwiegt und den Anker 5 wieder in die geschlossene Stellung bringt.

Es ist ebenfalls möglich, die Steuerspule selbst dazu zu nutzen, das gewünschte Freigabemagnetfeld zur Kompensation / Verringerung der Wirkung des Permanentmagneten zu erzeugen. Dies kann dadurch erreicht werden, dass die Stromrichtung durch die Steuerspule durch eine geeignete Schaltung umgekehrt wird.

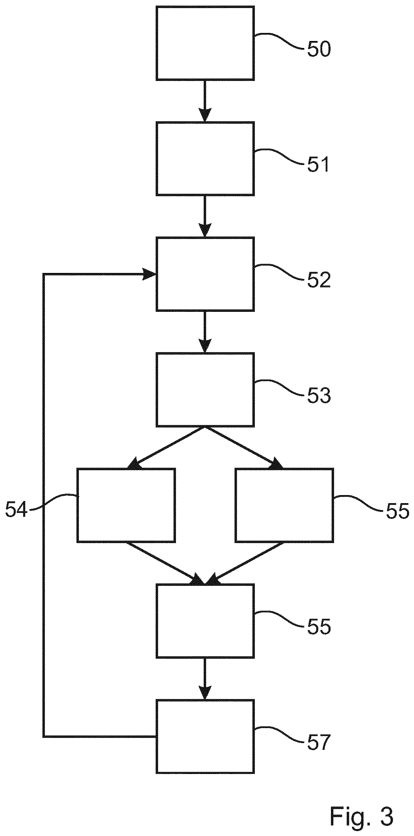

Fig. 3 zeigt ein Ausführungsbeispiel eines erfindungsgemäßen Verfahrens zur Steuerung eines Sektionsventils für eine Löschmittelleitung.

Das hier diskutierte Sektionsventil weist, wie beispielsweise auch die oben erläuterten Ausführungsbeispiele ein Steuerventil und ein Arbeitsventil auf, das für eine Vorsteuerung durch das Steuerventil ausgestaltet ist. Das Arbeitsventil umfasst eine Drosselbohrung, die eine erste Fluidverbindung zwischen einem druckführenden Zulauf des Sektionsventils und einem Kolbenraum des Arbeitsventils bildet, und einem Arbeitskolben, wobei eine erste Stirnfläche des Arbeitskolbens gegenüber dem Kolbenraum größer ist als eine zweite Stirnfläche gegenüber dem Zulauf. Das Steuerventil umfasst ferner einen Steuerventilsitz, einen Anker, der in einem auf den Steuerventilsitz gedrückten Zustand gemeinsam mit dem Steuerventilsitz eine zweite Fluidverbindung zwischen dem Kolbenraum und einem Ablauf des Sektionsventils schließt, einen magnetisierbaren Kern und eine Steuerspule, die für eine Ausübung einer magnetischen Kraft auf den Anker ausgestaltet ist.

Mit dem Steuerventil wird die zweite Fluidverbindung geöffnet und geschlossen, wobei beim Öffnen der Anker vom Steuerventilsitz soweit abgehoben wird, dass die zweite Fluidverbindung einen größeren Durchfluss als die erste Fluidverbindung erlaubt.

In Schritt 50 wird das Sektionsventil bereitgestellt, wobei in Schritt 51 ein Einstellen einer durch die Steuerspule zur Erreichung des Ansteuerungszustands aufzubringenden Kraft durch eine variable Positionierung des Kerns entlang einer von der Steuerfeder bewirkten Kraft erfolgt. Dieser Schritt 51 kann von einem (ggf. permanenten) Fixieren der Positionierung beispielsweise durch Kleben oder Schweißen gefolgt werden.

In Schritt 52 wird das Sektionsventil in den Ruhezustand gebracht. In diesem Zustand drückt die Steuerfeder den Anker auf den Steuerventilsitz, so dass die zweite Fluidverbindung geschlossen ist.

In Schritt 53 wird die Steuerspule mit Strom versorgt, so dass durch die dann wirkende Magnetkraft der Anker entgegen der Wirkung der Steuerfeder vom Steuerventilsitz abgehoben und damit das Steuerventil geöffnet wird.

In Schritt 54 wird durch die Steuerspule der Anker so nahe an den Kern gebracht, dass die durch den Permanentmagneten über den Kern auf den Anker wirkende Kraft groß genug ist, den Anker entgegen der Steuerfeder in abgehobenem Zustand zu halten.

Parallel dazu führt in Schritt 55 die Öffnung der zweiten Fluidverbindung dazu, dass der Druck im Kolbenraum absinkt und damit am Arbeitskolben infolge der Druckdifferenz zwischen Kolbenraum und Zulauf eine Kraft wirkt, die letztlich die Öffnung des Sektionsventils, also die Öffnung einer Verbindung zwischen Zulauf und Ablauf, sicherstellt.

In Schritt 56 wird der Permanentmagnet vom Sektionsventil entfernt, so dass die der Steuerfeder entgegenwirkende Kraft wegfällt oder zumindest ausreichend gemindert wird, so dass die Steuerfeder den Anker auf den Steuerventilsitz drückt, was die zweite Fluidverbindung schließt.

Da durch die Drosselbohrung Löschmittel in den Kolbenraum nachfließt, aber nicht mehr durch die zweite Fluidverbindung abfließt, ergibt sich in Schritt 57 im Kolbenraum (wieder) der Druck aus dem Zulauf, so dass nun infolge der unterschiedlichen Stirnflächen des Arbeitskolbens eine resultierende Kraft besteht, die zusammen mit der Arbeitsfeder den Arbeitskolben auf den Arbeitsventilsitz drückt, so dass das Sektionsventil geschlossen wird.

Damit ist wieder der Ruhezustand erreicht, so dass bei Rücksetzen des Permanentmagneten zu gegebener Zeit das Verfahren etwa bei Schritt 52 fortgeführt werden kann.

In einer alternativen oder ergänzenden Ausführung kann vor dem Ansteuerungszustand der Anker mittels des Kerns durch den Permanentmagneten auf den Steuerventilsitz gedrückt werden, wobei die Steuerspule für ein Abheben des Ankers entgegen einer Haltewirkung des Permanentmagneten vom Steuerventilsitz ausgestaltet ist, wobei der Permanentmagnet in und/oder an dem Magnethalter gehalten wird und der Permanentmagnet für einen Übergang in den Ansteuerungszustand entfernt wird, wobei im Ansteuerungszustand der vom Steuerventilsitz abgehobene Anker von einer Steuerfeder gehalten wird.

**Bezugszeichenliste**

| | | |
|---|---|---|
| 1 | Ventilkörper | |
| 2 | Arbeitskolben | |
| 3 | Dichtung | |
| 4 | Siebvorrichtung | |
| 5 | Anker | |
| 6 | Drosselbohrung | |
| 7 | Arbeitsfeder | (Druckfeder) |
| 8 | Arbeitsventilsitz | (Ventilsitz) |
| 9 | Dichtung | |
| 10 | Arbeitsventilfeder | (Feder) |
| 11 | Buchse | |
| 12 | Griff | |
| 13 | Signalkolben | (Kolben) |
| 14 | Abdichtung | (Dichtring) |
| 15 | Signalfeder | (Druckfeder) |
| 16 | oberer Ventildeckel | |
| 17 | Steuerventilsitz | (Sitz) |
| 18 | Eingangsstutzen | |
| 19 | Ausgangsstutzen | |
| 20 | unterer Ventildeckel | |
| 21 | Kolbenraum | |
| 22, | zweite Fluidverbindung | (Kombination aus druckhaltendem Kanalnetz + druckentlastendem Kanalnetz) |
| 24 | Ablauf | (Fluidaustrittskanal) |
| 25 | Zulauf | (Fluideintrittskanal) |
| 26 | Steuerspule | (erste Spule) |
| 27 | Freigabespule | (zweite Spule) |
| 28 | Magnethalter | |
| 29 | Permanentmagnet | |
| 30 | Gewindebuchse | |
| 31 | Gewindebolzen | |
| 33 | Führungsbuchse | |
| 34 | Steuerfeder | (Druckfeder) |
| 35 | magnetisierbarer Kern | |
| 36 | Bohrung des Steuerventilsitzes | |
| 37 | Ankerdichtung | |
| 39 | Befestigungsbuchse | |
| 40 | Dichtung | |
| 100 | Sektionsventil | |

## Patentansprüche

1. Ventil (100) zum Schalten von Fluiden, insbesondere Sektionsventil (100) für eine Löschmittelleitung, mit:
- einem Steuerventil und
- einem Arbeitsventil, das für eine Vorsteuerung durch das Steuerventil ausgestaltet ist, mit:
- einer Drosselbohrung (6), die eine erste Fluidverbindung zwischen einem mit Druck zu beaufschlagenden Zulauf (25) des Ventils (100) und einem Kolbenraum (21) des Arbeitsventils bildet, und
- einem Arbeitskolben (2), mit einer ersten Stirnfläche gegenüber dem Kolbenraum, die größer ist als eine zweite Stirnfläche gegenüber dem Zulauf (25),
wobei das Steuerventil für ein Öffnen und Schließen einer zweiten Fluidverbindung (22, 23) zwischen dem Kolbenraum (21) und einem Ablauf (24) des Ventils (100) ausgestaltet ist,
wobei das Steuerventil ferner umfasst:
- einen Steuerventilsitz (17),
- einen Anker (5), der in einem auf den Steuerventilsitz (17) gedrückten Zustand gemeinsam mit dem Steuerventilsitz (17) die zweite Fluidverbindung (22, 23) schließt,
- einen magnetisierbaren Kern (35) und
- eine Steuerspule (26), die für eine Ausübung einer magnetischen Kraft auf den Anker (5) ausgestaltet ist,
derart, dass die Steuerspule (26) den Anker (5) vom Steuerventilsitz (17) soweit abhebt, dass die zweite Fluidverbindung (22, 23) einen größeren Durchfluss als die erste Fluidverbindung erlaubt,
**gekennzeichnet dadurch, dass**
das Steuerventil
a)
- eine Steuerfeder (34, 34'), die den Anker (5) auf den Steuerventilsitz (17) drückt und entgegen derer die Steuerspule (26) den Anker vom Steuerventilsitz (17) abhebt,
- einen Permanentmagneten (29), der in einem Ansteuerungszustand für ein Halten des vom Steuerventilsitz (17) abgehobenen Ankers (5) mittels des Kerns (35) ausgestaltet ist, und
- einen Magnethalter (28) aufweist, in und/oder an dem der Permanentmagnet (29) in dem Ansteuerungszustand gehalten wird und der eine Entfernung des Permanentmagneten (29) erlaubt, und/oder
b)
- einen Permanentmagneten, der mittels des Kerns (35) den Anker (5) auf den Steuerventilsitz (17) drückt und entgegen dessen Haltewirkung die Steuerspule (26) den Anker (5) vom Steuerventilsitz (17) abhebt,
- eine Steuerfeder, die in einem Ansteuerungszustand für ein Halten des vom Steuerventilsitz (17) abgehobenen Ankers (5) ausgestaltet ist, und
- einen Magnethalter (28) aufweist, in und/oder an dem der Permanentmagnet gehalten wird und der eine Entfernung des Permanentmagneten für einen Übergang in dem Ansteuerungszustand erlaubt,
und **gekennzeichnet dadurch, dass**
das Steuerventil für eine entlang einer von der Steuerfeder (34, 34') bewirkten Kraft variable Positionierung des Kerns (35) ausgestaltet ist.

2. Ventil (100) nach Anspruch 1,
wobei das Steuerventil für eine Erzeugung eines Freigabemagnetfelds ausgestaltet ist, das einer Haltewirkung des Permanentmagneten (29) entgegenwirkt,
wobei die Steuerspule (26) und/oder eine Freigabespule (27) zur Erzeugung des Freigabemagnetfelds vorgesehen sind.

3. Ventil (100) nach Anspruch 2,
wobei die Freigabespule (27) im Magnethalter (28) vorgesehen ist.

4. Ventil (100) nach einem der vorstehenden Ansprüche,
wobei der Magnethalter (28) entfernbar vorgesehen ist.

5. Ventil (100) nach einem der vorstehenden Ansprüche,
wobei der Kern (35) in einer Führungsbuchse (33) des Steuerventils eingeschraubt, eingerastet, eingeklemmt, eingeklebt und/oder mit Distanzstücken positioniert ist.

6. Ventil (100) nach Anspruch 5,
wobei durch ein teilweises Herausschrauben oder Lösen des Kerns (35) aus der Führungsbuchse (33) der Anker (5) vom Steuerventilsitz (17) abhebbar ist.

7. Ventil (100) nach Anspruch 5 oder 6,
wobei das Steuerventil für
- ein Einschrauben und/oder Einrasten des Kerns (35) in die Führungsbuchse (33) mit in und/oder an dem Magnethalter (28) gehaltenen Permanentmagneten (29) und
- ein anschließendes Abheben des durch den Permanentmagneten (29) mittels des Kerns (35) gehaltenen Ankers (5) vom Steuerventilsitz (17) ausgestaltet ist.

8. Ventil (100) nach einem der vorstehenden Ansprüche, mit
- einem Arbeitsventilsitz (8), in den der Arbeitskolben (2) zur Abtrennung von Zulauf (25) und Ablauf (24) eindrückbar ist,
wobei der Arbeitsventilsitz (8) entlang einer Arbeitsrichtung des Arbeitskolbens (8) beweglich ist,
wobei der Arbeitsventilsitz (8) zumindest bei mit Druck beaufschlagtem Zulauf (25) und geschlossenem Arbeitsventil für
- eine Beaufschlagung mit einer Ventilsitzkraft und
- ein Folgen einer Bewegung des Arbeitskolbens (2) mit in den Arbeitsventilsitz (8) eingedrücktem Arbeitskolben (2) ausgestaltet ist.

9. Ventil (100) nach Anspruch 8,
wobei die Ventilsitzkraft durch eine Arbeitsventilfeder (10) und/oder eine Flächendifferenz zwischen einer Stirnfläche des Arbeitsventilsitzes (8) gegenüber dem Arbeitskolben (2) und einer Stirnfläche des Arbeitsventilsitzes (8) gegenüber dem Zulauf (25) bewirkbar ist.

10. Ventil (100) nach einem der vorstehenden Ansprüche,
mit einem Fluidflusssignalgeber mit einer Buchse (11) und einem in der Buchse (11) geführten Signalkolben (13) mit einer Ablaufstirnfläche, an der ein im Ablauf (24) des Ventils (100) herrschender Druck ansteht,
wobei der Signalkolben (13) durch eine Signalfeder (15) im drucklosen Zustand in einer Ruheposition gehalten wird und
- der Signalkolben (13) sich durch die Buchse (11) hindurch nach außen erstreckt, so dass von außen eine Position des Signalkolbens (13) erkennbar ist und/oder
- das Ventil (100) ein Erfassungsmittel zur Erfassung einer vorbestimmten Abweichung des Signalkolbens (13) von der Ruheposition aufweist.

11. Ventil (100) nach Anspruch 10, wobei die Erfassung durch ein Schließen und/oder Öffnen eines mechanischen, elektrischen, magnetischen und/oder optischen Kontakts bei wenigstens der vorbestimmten Abweichung des Signalkolbens (13) von der Ruheposition erfolgt.

12. Ventil (100) nach einem der Ansprüche 10 oder 11,
wobei der Signalkolben (13) eine Abdichtung (14) gegenüber der Buchse (11) aufweist, die sich zwischen Ablauf (25) und Signalfeder (15) und/oder in einer Außenwandung der Buchse (11) befindet.

13. Ventil (100) nach einem der Ansprüche 10 bis 12,
wobei der Signalkolben (13), insbesondere bei drucklosem Ablauf (24), durch eine Krafteinwirkung von außen in Richtung des Ablaufs (24) und/oder entgegen dieser Richtung zur Funktionsüberprüfung bewegbar ist.

14. Ventil (100) nach einem der Ansprüche 10 bis 13,
wobei Signalkolben (13) und Signalfeder (15) so dimensioniert sind, dass bei einem vorbestimmten Druck im Ablauf (24) der Signalkolben (13) mit der Buchse (11) in Anschlag kommt.

15. Löschanlage mit einer Löschmittelleitung und einem Ventil (100) nach einem der vorstehenden Ansprüche.

16. Verfahren zur Steuerung eines Ventils zum Schalten von Fluiden, insbesondere eines Sektionsventils (100) für eine Löschmittelleitung, wobei das Ventil (100) ein Steuerventil und ein Arbeitsventil aufweist, das für eine Vorsteuerung durch das Steuerventil ausgestaltet ist, mit einer Drosselbohrung (6), die eine erste Fluidverbindung zwischen einem mit Druck zu beaufschlagenden Zulauf (25) des Ventils (100) und einem Kolbenraum (21) des Arbeitsventils bildet, und einem Arbeitskolben (2), mit einer ersten Stirnfläche gegenüber dem Kolbenraum, die größer ist als eine zweite Stirnfläche gegenüber dem Zulauf (25), wobei das Steuerventil ferner umfasst: einen Steuerventilsitz (17), einen Anker (5), der in einem auf den Steuerventilsitz (17) gedrückten Zustand gemeinsam mit dem Steuerventilsitz (17) eine zweite Fluidverbindung (22, 23) zwischen dem Kolbenraum (21) und einem Ablauf (24) des Ventils (100) schließt, einen magnetisierbaren Kern (35) und eine Steuerspule (26), die für eine Ausübung einer magnetischen Kraft auf den Anker (5) ausgestaltet ist,
wobei mit dem Steuerventil die zweiten Fluidverbindung (22, 23) geöffnet und geschlossen wird, wobei beim Öffnen der Anker (5) vom Steuerventilsitz (17) soweit abgehoben wird, dass die zweite Fluidverbindung (22, 23) einen größeren Durchfluss als die erste Fluidverbindung erlaubt,
**gekennzeichnet dadurch, dass**
a) in einem Ansteuerungszustand der vom Steuerventilsitz (17) entgegen einer Steuerfeder (34, 34'), die den Anker (5) auf den Steuerventilsitz (17) drückt, abgehobene Anker (5) mittels des Kerns (35) durch einen Permanentmagneten (29) gehalten wird, wobei der Permanentmagnet (29) in dem Ansteuerungszustand in und/oder an einem Magnethalter (28) gehalten wird, wobei zur Beendigung des Ansteuerungszustands der Permanentmagnet (29) entfernt wird, und/oder
b) vor einem Ansteuerungszustand der Anker (5) mittels des Kerns (35) durch einen Permanentmagneten auf den Steuerventilsitz gedrückt wird, wobei die Steuerspule (26) für ein Abheben des Ankers (5) entgegen einer Haltewirkung des Permanentmagneten vom Steuerventilsitz (17) ausgestaltet ist, wobei der Permanentmagnet in und/oder an einem Magnethalter (28) gehalten wird und der Permanentmagnet für einen Übergang in den Ansteuerungszustand entfernt wird, wobei im Ansteuerungszustand der vom Steuerventilsitz (17) abgehobene Anker (5) von einer Steuerfeder (34, 34') gehalten wird,
und **gekennzeichnet durch**
einen Schritt des Einstellens einer durch die Steuerspule zur Erreichung des Ansteuerungszustands aufzubringenden Kraft durch eine variable Positionierung des Kerns (35) entlang einer von der Steuerfeder (34, 34') bewirkten Kraft.

## Claims

1. A valve (100) for switching fluids, in particular a sectional valve (100) for an extinguishing agent line, with:
- a control valve and
- a working valve, which is designed for pilot control by the control valve, with:
- a throttle bore (6) that establishes a first fluid connection between an inlet (25) of the valve (100) to be pressurized and a piston chamber (21) of the working valve, and
- a working piston (2) with a first end face opposite the piston chamber that is larger than a second end face opposite the inlet (25),
wherein the control valve is configured to open and close a second fluid connection (22, 23) between the piston chamber (21) and an outlet (24) of the valve (100),
wherein the control valve further has:
- a control valve seat (17),
- an anchor (5) that closes the second fluid connection (22, 23) together with the control valve seat (17) when pressed onto the control valve seat (17),
- a magnetizable core (35) and
- a control coil (26) configured to exert a magnetic force on the anchor (5), such that the control coil (26) lifts the anchor (5) from the control valve seat (17) to an extent that the second fluid connection (22, 23) allows a greater flow than the first fluid connection,
**characterized in that**
the control valve has
a)
- a control spring (34, 34'), which presses the anchor (5) onto the control valve seat (17), and against which the control coil (26) lifts the anchor from the control valve seat (17),
- a permanent magnet (29), which in an actuation state is configured to hold the anchor (5) lifted from the control valve seat (17) by means of the core (35), and
- a magnet holder (28), in and/or on which the permanent magnet (29) is held in the actuation state, and which permits a removal of the permanent magnet (29), and/or
b)
- a permanent magnet, which presses the anchor (5) onto the control valve seat (17) by means of the core (35), and against the retaining effect of which the control coil (26) lifts the anchor (5) from the control valve seat (17),
- a control spring, which in an actuation state is configured to hold the anchor (5) lifted off of the control valve seat (17), and
- a magnet holder (28), in and/or on which the permanent magnet is held, and which allows a removal the permanent magnet for a transition into the actuation state,
and **characterized in that**
the control valve is configured to variably position the core (35) along a force generated by the control spring (34, 34').

2. The valve (100) according to claim 1,
wherein the control valve is configured to generate a releasing magnetic field, which counteracts a retaining effect of the permanent magnet (29),
wherein the control coil (26) and/or a releasing coil (27) are provided for generating the releasing magnetic field.

3. The valve (100) according to claim 2,
wherein the releasing coil (27) is provided in the magnet holder (28).

4. The valve (100) according to one of the preceding claims,
wherein the magnet holder (28) is removable.

5. The valve (100) according to one of the preceding claims,
wherein the core (35) is screwed, latched, clamped, bonded and/or positioned with spacers into a guide bushing (33) of the control valve.

6. The valve (100) according to claim 5,
wherein the anchor (5) can be lifted off of the control valve seat (17) by partially unscrewing or loosening the core (35) from the guide bushing (33).

7. The valve (100) according to claim 5 or 6,
wherein the control valve is designed for
- screwing and/or latching the core (35) into the guide bushing (33) with the permanent magnet (29) held in and/or on the magnet holder (28), and
- subsequently lifting the anchor (5) held by the permanent magnet (29) via the core (35) from the control valve seat (17).

8. The valve (100) according to one of the preceding claims, with
- a working valve seat (8), into which the working piston (2) can be pressed to separate the inlet (25) and outlet (24),
wherein the working valve seat (8) can be moved along the working direction of the piston (8),
wherein, at least with the inlet (25) pressurized and the working valve closed, the working valve seat (8) is configured
- to be exposed to a valve seat force and
- to follow a movement of the working piston (2) with the working piston (2) pressed into the working valve seat (8).

9. The valve (100) according to claim 8,
wherein the valve seat force can be produced by a working valve spring (10) and/or a difference in area between an end face of the working valve seat (8) relative to the working piston (2), and an end face of the working valve seat (8) relative to the inlet (25).

10. The valve (100) according to one of the preceding claims,
with a fluid flow signal generator with a bushing (11) and a signal piston (13) guided in the bushing (11) with an outlet end face, to which the pressure prevailing in the outlet (24) of the valve (100) is applied,
wherein the signal piston (13) is held in a resting position by a signal spring (15) in an unpressurized state, and
- the signal piston (13) extends outwardly through the bushing (11), so that a position of the signal piston (13) is discernible from outside, and/or
- the valve (100) has a detection means for detecting a predetermined deviation of the signal piston (13) from the resting position.

11. The valve (100) according to claim 10, wherein detection takes place by a closing and/or opening of a mechanical, electrical, magnetic and/or optical contact given at least the predetermined deviation of the signal piston (13) from the resting position.

12. The valve (100) according to one of claims 10 or 11,
wherein the signal piston (13) has a seal (14) relative to the bushing (11), which is located between the outlet (25) and signal spring (15) and/or in an outer wall of the bushing (11).

13. The valve (100) according to one of claims 10 to 12,
wherein the signal piston (13), in particular given an unpressurized outlet (24), can be moved through exposure to an outside force in the direction of the outlet (24) and/or opposite this direction to check the function.

14. The valve (100) according to one of claims 10 to 13,
wherein signal pistons (13) and signal springs (15) are dimensioned in such a way that the signal piston (13) comes to abut against the bushing (11) given a predetermined pressure in the outlet (24).

15. An extinguishing system with an extinguishing agent line and a valve (100) according to one of the preceding claims.

16. A method for controlling a valve for switching fluids, in particular a sectional valve (100) for an extinguishing agent line, wherein the valve (100) has a control valve and a working valve, which is configured for pilot control by the control valve, with a throttle bore (6) that establishes a first fluid connection between an inlet (25) of the valve (100) to be pressurized and a piston chamber (21) of the working valve, and a working piston (2) with a first end face opposite the piston chamber that is larger than a second end face opposite the inlet (25), wherein the control valve further has: a control valve seat (17), an anchor (5) that closes the second fluid connection (22, 23) between the piston chamber (21) and an outlet (24) of the valve (100) together with the control valve seat (17) when pressed onto the control valve seat (17), a magnetizable core (35) and a control coil (26) configured to exert a magnetic force on the anchor (5),
wherein the control valve is used to open and close the second fluid connection (22, 23), wherein the anchor (5) is lifted from the control valve seat (17) during the opening process to an extent that the second fluid connection allows (22, 23) a greater flow than the first fluid connection,
**characterized in that**
a) in an actuation state, the anchor (5) lifted from the control valve seat (17) against a control spring (34, 34') that presses the anchor (5) onto the control valve seat (17) is held by means of the core (35) via a permanent magnet (29), wherein the permanent magnet (29) in the actuation state is held in and/or on a magnet holder (28), wherein the permanent magnet (29) is removed to end the actuation state, and/or
b) before an actuation state, the anchor (5) is pressed onto the control valve seat by means of the core (35) via a permanent magnet, wherein the control coil (26) is configured to lift the anchor (5) from the control valve seat (17) against a retaining effect of the permanent magnet, wherein the permanent magnet is held in and/or on a magnet holder (28), and the permanent magnet is removed for transitioning into the actuation state, wherein in the actuation state, the anchor (5) lifted from the control valve seat (17) is held by a control spring (34, 34'),
and **characterized by**
a step of setting a force to be applied by the control coil to achieve the actuation state by variably positioning the core (35) along a force generated by the control spring (34, 34').

## Revendications

1. Soupape (100) pour commuter des fluides, en particulier soupape sectionnelle (100) pour un conduit d'agent d'extinction d'incendie, avec :
- une soupape de commande, et
- une soupape de travail, qui est configurée pour une commande préliminaire par la soupape de commande, avec :
- un alésage d'étranglement (6), qui forme une première liaison de communication fluidique entre une arrivée (25), à soumettre à l'action d'une pression, de la soupape (100) et une chambre de piston (21) de la soupape de travail, et
- un piston de travail (2), avec une première surface frontale par rapport à la chambre de piston, qui est plus grande qu'une deuxième surface frontale par rapport à l'arrivée (25)
dans laquelle la soupape de commande est configurée pour une ouverture et une fermeture d'une deuxième liaison de communication fluidique (22, 23) entre la chambre de piston (21) et une sortie (24) de la soupape (100),
dans laquelle la soupape de commande comprend en outre :
- un siège de soupape de commande (17),
- un induit (5), qui ferme la deuxième communication fluidique (22, 23) conjointement avec le siège de soupape de commande (17) dans un état pressé sur le siège de soupape de commande (17),
- un noyau magnétisable (35) et
- une bobine de commande (26) qui est configurée pour exercer une force magnétique sur l'induit (5),
de telle manière que la bobine de commande (26) soulève l'induit (5) du siège de soupape de commande (17) jusqu'à ce que la deuxième liaison de communication fluidique (22, 23) permette un plus grand débit que la première liaison de communication fluidique,
**caractérisée** en ce
la soupape de commande présente
a)
- un ressort de commande (34, 34'), qui pousse l'induit (5) sur le siège de soupape de commande (17) et le long duquel la bobine de commande (26) soulève l'induit du siège de soupape de commande (17),
- un aimant permanent (29), qui est configuré dans un état de pilotage pour un maintien de l'induit (5) soulevé du siège de soupape de commande (17) au moyen du noyau (35), et
- un porte-aimant (28), dans et/ou sur lequel l'aimant permanent (29) est maintenu dans l'état de pilotage et qui permet un retrait de l'aimant permanent (29) et/ou
b)
- un aimant permanent, qui pousse l'induit (5) sur le siège de soupape de commande (17) au moyen du noyau (35) et à l'encontre de l'action de maintien duquel la bobine de commande (26) soulève l'induit (5) du siège de soupape de commande (17),
- un ressort de commande, qui est configuré, dans un état de pilotage, pour un maintien de l'induit (5) soulevé du siège de soupape de commande (17), et
- un porte-aimant (28), dans lequel et/ou sur lequel l'aimant permanent est maintenu et qui permet un retrait de l'aimant permanent pour un passage dans l'état de pilotage,
et **caractérisée en ce que**
la soupape de commande est configurée pour une position du noyau (35) variable le long d'une force entraînée par le ressort de commande (34, 34').

2. Soupape (100) selon la revendication 1,
dans laquelle la soupape de commande est configurée pour une génération d'un champ magnétique de déblocage, qui contrecarre une action de maintien de l'aimant permanent (29),
dans laquelle la bobine de commande (26) et/ou une bobine de déblocage (27) sont prévues pour générer le champ magnétique de déblocage.

3. Soupape (100) selon la revendication 2,
dans laquelle la bobine de déblocage (27) est prévue dans le porte-aimant (28).

4. Soupape (100) selon l'une quelconque des revendications précédentes,
dans laquelle le porte-aimant (28) est prévu de manière à pouvoir être retiré.

5. Soupape (100) selon l'une quelconque des revendications précédentes,
dans laquelle le noyau (35) est vissé, enclenché, coincé, collé et/ou positionné avec des pièces d'espacement dans une douille de guidage (33) de la soupape de commande.

6. Soupape (100) selon la revendication 5,
dans laquelle l'induit (5) peut être soulevé du siège de soupape de commande (17) par une sortie par vissage partielle ou un desserrage du noyau (35) hors de la douille de guidage (33).

7. Soupape (100) selon la revendication 5 ou 6, dans laquelle la soupape de commande est configurée pour
- un vissage et/ou un enclenchement du noyau (35) dans la douille de guidage (33) avec des aimants permanents (29) maintenus dans et/ou sur le porte-aimant (28), et
- un soulèvement qui suit de l'induit (5) maintenu par l'aimant permanent (29) au moyen du noyau (35) du siège de soupape de commande (17).

8. Soupape (100) selon l'une quelconque des revendications précédentes, avec
- un siège de soupape de travail (8), dans lequel le piston de travail (2) peut être enfoncé pour séparer l'arrivée (25) et la sortie (24),
dans laquelle le siège de soupape de travail (8) est mobile le long d'une direction de travail du piston de travail (8),
dans laquelle le siège de soupape de travail (8) est configuré, au moins lorsque l'arrivée (25) est soumise à l'action d'une pression et que la soupape de travail est fermée pour
- être soumis à l'action d'une force de siège de soupape et
- suivre un mouvement du piston de travail (2) avec un piston de travail (2) enfoncé dans le siège de soupape de travail (8).

9. Soupape (100) selon la revendication 8,
dans laquelle la force de siège de soupape peut être entraînée par un ressort de soupape de travail (10) et/ou une différence de surface entre une surface frontale du siège de soupape de travail (8) par rapport au piston de travail (2) et une surface frontale du siège de soupape de travail (8) par rapport à l'arrivée (25).

10. Soupape (100) selon l'une quelconque des revendications précédentes,
avec un émetteur de signaux de flux de fluide avec une douille (11) et un piston de signaux (13) guidé dans la douille (11) avec une surface frontale de sortie, sur laquelle est appliquée une pression régnant dans la sortie (24) de la soupape (100),
dans laquelle le piston de signalisation (13) est maintenu par un ressort de signalisation (15) dans l'état sans pression dans une position de repos, et
- le piston de signalisation (13) s'étend vers l'extérieur à travers la douille (11) de part en part de sorte qu'une position du piston de signalisation (13) puisse être identifiée depuis l'extérieur et/ou
- la soupape (100) présente un moyen de détection pour détecter un écart prédéfini du piston de signalisation (13) par rapport à la position de repos.

11. Soupape (100) selon la revendication 10, dans laquelle la détection est effectuée par une fermeture et/ou une ouverture d'un contact mécanique, électrique, magnétique et/ou optique dans le cas au moins de l'écart prédéfini du piston de signalisation (13) par rapport à la position de repos.

12. Soupape (100) selon l'une quelconque des revendications 10 ou 11,
dans laquelle le piston de signalisation (13) présente une étanchéification (14) par rapport à la douille (11), qui se trouve entre la sortie (25) et le ressort de signalisation (15) et/ou dans une paroi extérieure de la douille (11).

13. Soupape (100) selon l'une quelconque des revendications 10 à 12,
dans laquelle le piston de signalisation (13) peut être déplacé, en particulier dans le cas d'une sortie (24) sans pression, par un effet de force depuis l'extérieur en direction de la sortie (24) et/ou à l'encontre de ladite direction aux fins de la vérification de fonction.

14. Soupape (100) selon l'une quelconque des revendications 10 à 13,
dans laquelle le piston de signalisation (13) et le ressort de signalisation (15) sont dimensionnés de telle sorte que, dans le cas d'une pression prédéfinie dans la sortie (24), le piston de signalisation (13) vienne buter avec la douille (11).

15. Installation d'extinction d'incendie avec un conduit d'agent d'extinction d'incendie et une soupape (100) selon l'une quelconque des revendications précédentes.

16. Procédé pour commander une soupape pour commuter des fluides, en particulier une soupape sectionnelle (100) pour un conduit d'agent d'extinction d'incendie, dans lequel la soupape (100) présente une soupape de commande et une soupape de travail, qui est configurée pour une commande préliminaire par la soupape de commande, avec un alésage d'étranglement (6), qui forme une première liaison de communication fluidique entre une arrivée (25), à soumettre à l'action d'une pression, de la soupape (100) et une chambre de piston (21) de la soupape de travail, et un piston de travail (2), avec une première surface frontale par rapport à la chambre de piston, qui est plus grande qu'une deuxième surface frontale par rapport à l'arrivée (25), dans lequel la soupape de commande comprend en outre : un siège de soupape de commande (17), un induit (5), qui ferme, dans un état pressé sur le siège de soupape de commande (17), conjointement avec le siège de soupape de commande (17), une deuxième liaison de communication fluidique (22, 23) entre la chambre de piston (21) et une sortie (24) de la soupape (100), un noyau magnétisable (35) et une bobine de commande (26), qui est configurée pour exercer une force magnétique sur l'induit (5),
dans lequel la deuxième liaison de communication fluidique (22, 23) est ouverte et fermée avec la soupape de commande, dans lequel lors de l'ouverture, l'induit (5) est soulevé du siège de soupape de commande (17) jusqu'à ce que la deuxième liaison de communication fluidique (22, 23) présente un débit plus important que la première liaison de communication fluidique,
**caractérisé en ce que**
a) dans un état de pilotage, l'induit (5) soulevé du siège de soupape de commande (17) à l'encontre d'un ressort de commande (34, 34'), qui pousse l'induit (5) sur le siège de soupape de commande (17), est maintenu au moyen du noyau (35) par un aimant permanent (29), dans lequel l'aimant permanent (29) est maintenu dans un état de pilotage dans et/ou sur un porte-aimant (28), dans lequel, pour mettre fin à l'état de pilotage, l'aimant permanent (29) est retiré, et/ou
b) avant un état de pilotage, l'induit (5) est poussé au moyen du noyau (35) par un aimant permanent sur le siège de soupape de commande, dans lequel la bobine de commande (26) est configurée pour soulever du siège de soupape de commande (17) l'induit (5) à l'encontre d'une action de maintien de l'aimant permanent, dans lequel l'aimant permanent est maintenu dans et/ou sur un porte-aimant (28) et l'aimant permanent est retiré pour un passage dans l'état de pilotage, dans lequel, dans l'état de pilotage, l'induit (5) soulevé du siège de soupape de commande (17) est maintenu par un ressort de commande (34, 34'),
et **caractérisé par**
une étape du réglage d'une force à appliquer à la bobine de commande pour atteindre l'état de pilotage par un positionnement variable du noyau (35) le long d'une force entraînée par le ressort de commande (34, 34').
